(19) Europäisches Patentamt
European Patent Office
Office européen des brevets

(11) EP 4 576 274 A1

(12) **EUROPEAN PATENT APPLICATION**
published in accordance with Art. 153(4) EPC

(43) Date of publication:
**25.06.2025 Bulletin 2025/26**

(21) Application number: **23880244.1**

(22) Date of filing: **19.10.2023**

(51) International Patent Classification (IPC):
***H01M 4/66*** (2006.01) ***H01M 4/62*** (2006.01)
***C08G 61/12*** (2006.01) ***C08G 65/326*** (2006.01)
***H01M 4/131*** (2010.01) ***H01M 10/052*** (2010.01)
***H01M 4/02*** (2006.01)

(52) Cooperative Patent Classification (CPC):
**C08G 61/12; C08G 65/326; H01M 4/02; H01M 4/131; H01M 4/62; H01M 4/66; H01M 10/052;** Y02E 60/10

(86) International application number:
**PCT/KR2023/016209**

(87) International publication number:
**WO 2024/085668 (25.04.2024 Gazette 2024/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.10.2022 KR 20220135139**

(71) Applicants:
- **LG CHEM, LTD.**
  **Seoul 07336 (KR)**
- **LG Energy Solution, Ltd.**
  **Seoul 07335 (KR)**

(72) Inventors:
- **SONG, In Taek**
  **Daejeon 34122 (KR)**
- **KWON, Soon Ho**
  **Daejeon 34122 (KR)**
- **PARK, Sung Bin**
  **Daejeon 34122 (KR)**
- **KIM, Min Gyu**
  **Daejeon 34122 (KR)**
- **CHO, Woo Hyung**
  **Daejeon 34122 (KR)**
- **KANG, Joon Koo**
  **Daejeon 34122 (KR)**
- **KIM, Ki Hwan**
  **Daejeon 34122 (KR)**
- **PARK, Eun Kyoung**
  **Daejeon 34122 (KR)**
- **KOH, Jong Kwan**
  **Daejeon 34122 (KR)**
- **CHOI, Hyun Ju**
  **Daejeon 34122 (KR)**
- **YANG, Hee Myeong**
  **Daejeon 34122 (KR)**

(74) Representative: **Plasseraud IP**
**104 Rue de Richelieu**
**CS92104**
**75080 Paris Cedex 02 (FR)**

# (54) CURRENT COLLECTOR

(57) The present specification discloses a current collector. The current collector comprises: a current collector body; and a polymer layer formed on the current collector body, wherein the polymer layer may comprise a conductive polymer and a conductive material. The current collector can exhibit excellent electrical properties, including low resistance, in a normal state and can ensure stability through an increase in resistance, and the like, in an abnormal state. The present specification also discloses a use of the current collector.

[Figure 1]

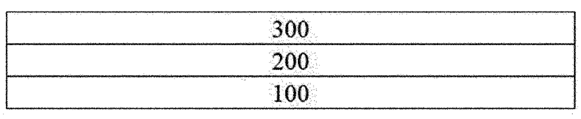


EP 4 576 274 A1

## Description

### Technical Field

This application claims the benefit of priority based on Korean Patent Application No. 10-2022-0135139 dated October 19, 2022, the disclosure of which is incorporated herein by reference in its entirety.
This specification discloses a current collector and its use.

### Background Art

An energy storage technology has expanded application areas to mobile phones, tablet and notebook PCs, or electric vehicles, and the like.
As the data processing speed of mobile devices such as mobile phones or tablets increases and their usage hours also increase, the development of secondary batteries with high energy density and operating potential, long cycle life, and low self-discharge rate is in progress.
As major developed countries suppress production of cars driven by internal combustion engines to alleviate global warming and air pollution, major automobile manufacturers also develop various electric vehicles, and thus the importance of secondary batteries having high energy density, high discharge voltage, and output stability increases as driving sources thereof.
However, according to the above trend, the occurrence frequency of ignition or explosion accidents due to overcharging, high-temperature exposure or outer shocks, and the like in devices or automobiles using secondary batteries as an energy source also increases.
As a main cause of such accidents, a short phenomenon, in which a positive electrode and a negative electrode inside an electrode assembly come into direct contact with each other mainly due to external stimuli, is known. When the secondary battery is overcharged or exposed to high temperatures or external stimuli, the short phenomenon can occur by the separator shrinkage due to the internal temperature increase of the secondary battery, or the internal structure destruction of the secondary battery due to outer shocks, and the like.
When the short phenomenon occurs, migration of lithium ions and electrons is concentrated through the region where the positive electrode and the negative electrode are in direct contact with each other, so that internal heat generation can be promoted. Accordingly, it is known that as gas or the like is generated inside the battery, the volume expands, and the risk of ignition increases.

### Disclosure

### Technical Problem

The present specification discloses a current collector and a use thereof. The present specification is intended to disclose a current collector capable of exhibiting excellent electrical properties, including low resistance, in a normal state, and ensuring stability through an increase in resistance, and the like, in an abnormal state. The present specification is intended to disclose a use of the current collector.

### Technical Solution

In this specification, the term room temperature means a natural temperature without heating or cooling, which may be, for example, any one temperature in a range of 10°C to 30°C, or a temperature of about 23°C, or about 25°C or so.
Among the physical properties mentioned in this specification, when the measurement temperature affects the physical property, the relevant physical property is a physical property measured at room temperature, unless otherwise specified.
The unit of temperature in this specification is Celsius (°C), unless otherwise specified.
In this specification, the term normal pressure means a natural pressure without pressurization or depressurization, which may usually mean a pressure of about 730 mmHg to 790 mmHg or so. Among the physical properties mentioned in this specification, when the measurement pressure affects the physical property, the relevant physical property is a physical property measured at normal pressure, unless otherwise specified.
Among the physical properties mentioned in this specification, when the measurement humidity affects the result, the relevant physical property is a physical property measured at humidity under standard conditions, unless otherwise specified.
The humidity under standard conditions means any relative humidity in a range of 40% to 60% in relative humidity, which means, for example, relative humidity of 55%, or 60% or so.

In this specification, the term normal state means a normal operating state of a secondary battery (e.g., a normal charging or discharging state of a secondary battery), or a storage state thereof.

In this specification, the term abnormal state means a dangerous state in which abnormal charge flow, abnormal heating, or explosion, and the like occurs due to an external impact and/or a short circuit phenomenon, and the like, or in which a probability of occurrence of such an abnormal state is increased.

The present specification discloses a current collector. The current collector may be an electrode current collector.

The current collector may comprise a current collector body and a polymer layer formed on the body. The current collector may be used for formation of an electrode. For example, an electrode formed using the current collector may comprise the current collector and an active material layer formed on the polymer layer of the current collector. Figure 1 is a diagram showing an electrode in which an active material layer (300) is formed on the polymer layer (200) of the current collector including the current collector body (100) and the polymer layer (200).

In the current collector or electrode, the current collector body (100) and the polymer layer (200), and the polymer layer (200) and the active material layer (300) may also be in contact with each other, and other elements may also exist therebetween. Also, in the drawing, the active material layer (300) is shown on only one side of the current collector body (100), but the active material layer (300) may also be present on both sides of the current collector body (100). In this case, the polymer layer (200) may also be present in two layers between each of the active material layers (300) present on both sides of the current collector body (100), and the current collector body (100), and may also be present in one layer between any one of the active material layers (300) present on both sides, and the current collector body (100).

The electrode formed by the current collector may be a negative electrode (anode) or a positive electrode (cathode) applied to a secondary battery.

In the current collector or electrode, the polymer layer is a layer capable of variably controlling the migration of charges through the electrode depending on temperature.

By applying the polymer layer, the current collector or electrode, or an electrochemical element such as a secondary battery applied by the same can exhibit stable and improved performance in a normal state, and can secure stability through an increase in resistance, and the like, in an abnormal state.

In one example, the upper limit of DC resistance of the polymer layer, current collector or electrode at 25°C may be 10,000 Ω·cm, 9500 Ω·cm, 9000 Ω·cm, 8500 Ω·cm, 8000 Ω·cm, 7500 Ω·cm, 7000 Ω·cm, 6500 Ω·cm, 6000 Ω·cm, 5500 Ω·cm, 5000 Ω·cm, 4500 Ω·cm, 4000 Ω·cm, 3500 Ω·cm, 3000 Ω·cm, 2500 Ω·cm, 2000 Ω·cm, 1500 Ω·cm, 1000 Ω·cm, 950 Ω·cm, 900 Ω·cm, 850 Ω·cm, 800 Ω·cm, 750 Ω·cm, 700 Ω·cm, 650 Ω·cm, 600 Ω·cm, 550 Ω·cm, 500 Ω·cm, 450 Ω·cm, 400 Ω·cm, or 350 Ω·cm or so, and the lower limit thereof may be 10 Ω·cm, 50 Ω·cm, 100 Ω·cm, 150 Ω·cm, 200 Ω·cm, 250 Ω·cm, 300 Ω·cm, 350 Ω·cm, 400 Ω·cm, 450 Ω·cm, 500 Ω·cm, 550 Ω·cm, or 600 Ω·cm or so. The DC resistance may be within a range of less than or equal to, or less than any one of the above-described upper limits; or may also have a range between less than or equal to, or less than any one of the above-described upper limits and more than or equal to, or more than any one of the above-described lower limits.

The DC resistance can be measured for a coin cell to which the polymer layer is applied. The coin cell can be manufactured by forming the polymer layer to a thickness of about 200 nm on an aluminum foil (Al foil) having a thickness of about 15 μm, laminating it with a separator and a lithium film to manufacture a laminate of aluminum foil/polymer layer/separator/lithium film, and punching the laminate into a circle with a diameter of about 1.4 cm or so. The coin cell can be manufactured using a Welcos CR2032 coin cell kit, and can be manufactured using the punched laminate and an electrolyte. As the separator, W-Scope Korea's WL20C model can be used; as the lithium film, a film with a thickness of about 100 μm or so can be used; and as the electrolyte, a 1M $LiPF_6$ solution (solvent: EC/DMC/EMC=3/4/3 (mass ratio), EC: ethylene carbonate, DMC: dimethyl carbonate, EMC: ethylmethyl carbonate), which is Enchem's product, can be used. The DC resistance can be measured by applying a voltage of 4.3eV to the coin cell for 10 minutes at room temperature (25°C), and using Fluke's digital multi-tester (FLUKE-87-5).

The upper limit of AC impedance resistance of the polymer layer, current collector or electrode may be 1,000 Ω, 950 Ω, 900 Ω, 850 Ω, 800 Ω, 750 Ω, 700 Ω, 650 Ω, 600 Ω, 550 Ω, 500 Ω, 450 Ω, 400 Ω, 350 Ω, 300 Ω, 250 Ω, 200 Ω, 150 Ω, 100 Ω, 95 Ω, 90 Ω, 85 Ω, 80 Ω, 75 Ω, 70 Ω, 65 Ω, 60 Ω, 55 Ω, or 50 Ω or so, and the lower limit thereof may be 10 Ω, 15 Ω, 20 Ω, 25 Ω, 30 Ω, 35 Ω, 40 Ω, 450 Ω, 50 Ω, 55 Ω, 60 Ω, 65 Ω, 70 Ω, 75 Ω, 80 Ω, or 85 Ω or so. The AC impedance resistance may be within a range of less than or equal to, or less than any one of the above-described upper limits; or may also have a range between less than or equal to, or less than any one of the above-described upper limits and more than or equal to, or more than any one of the above-described lower limits.

The AC impedance resistance can be measured as interface resistance obtained the high frequency region from the Nyquist plot obtained by applying a voltage of 4.3V for 10 minutes at room temperature (25°C) to the same coin cell used for the DC resistance measurement, and using the EIS measurement method at 50,000 Hz to 0.1 Hz. In this process, an electrochemical measuring instrument (potentiostat) (Princeton Applied Research, PARASTAT-MC) can be used as the EIS measuring instrument.

The upper limit of the EIS conductivity of the polymer layer, current collector or electrode may be 1,000 Ω, 950 Ω,

900 Ω, 850 Ω, 800 Ω, 750 Ω, 700 Ω, 650 Ω, 600 Ω, 550 Ω, 500 Ω, 450 Ω, 400 Ω, 350 Ω, 300 Ω, 250 Ω, 200 Ω, 150 Ω, 100 Ω, 95 Ω, 90 Ω, 85 Ω, 80 Ω, 75 Ω, 70 Ω, 65 Ω, 60 Ω, 55 Ω, or 50 Ω or so, and the lower limit thereof may be 10 Ω, 15 Ω, 20 Ω, 25 Ω, 30 Ω, 35 Ω, 40 Ω, 450 Ω, 50 Ω, 55 Ω, 60 Ω, 65 Ω, 70 Ω, 75 Ω, 80 Ω, or 85 Ω or so. The EIS conductivity may be within a range of less than or equal to, or less than any one of the above-described upper limits; or may also have a range between less than or equal to, or less than any one of the above-described upper limits and more than or equal to, or more than any one of the above-described lower limits. The EIS conductivity can be measured in the manner described in "4. EIS ((Electrochemical Impedance Spectroscopy) conductivity (ohms) evaluation method" of Example sections in this specification.

As the polymer layer, current collector, or electrode exhibits the DC resistance, AC impedance resistance and/or EIS conductivity, the secondary battery or electrode assembly to which the polymer layer or the like is applied may be stably operated or stored in a normal state and a storage state.

The current collector and electrode to which the polymer layer is applied can secure stability through an increase in resistance in an abnormal state.

For example, the polymer layer, current collector, or electrode may exhibit characteristics in which R of Equation A below is within a predetermined range.

[Equation A]

$$R = R_{MAX}/R_{MIN}$$

In Equation A, $R_{MAX}$ is the maximum value of the EIS resistance of the polymer layer or current collector confirmed in a temperature range of 25°C to 135°C, and $R_{MIN}$ is the minimum value of the EIS resistance of the polymer layer or current collector confirmed in a temperature range of 25°C to 135°C.

$R_{MAX}$ and $R_{MIN}$ of Equation A can be evaluated using a coin cell using the polymer layer or current collector, and the specific method is summarized in "5. Measurement of maximum resistance change rate (EIS resistance)" of Example sections (measurement of maximum resistance change rate using coin cell 1 of the section). In the method for confirming the R, the initial temperature is 25°C and the final temperature is 135°C. The EIS resistance can be measured at each temperature while increasing the temperature by 5°C from the initial temperature of 25°C, and the maximum and minimum values of the EIS resistance can each be obtained. As the R has a large value, it means that the PTC effect of the polymer is appropriately exerted.

The lower limit of the R may be 100, 150, 200, 250, 300, 350, 400, 450, or 500, and the upper limit thereof may be 1500, 1400, 1300, 1200, 1100, 1000, 950, 900, 850, 800, 750, 700, 650, 600, 550, 500, or 450 or so. The R may be within a range of more than or equal to, or more than any one of the above-described lower limits; or may also have a range between less than or equal to, or less than any one of the above-described upper limits and more than or equal to, or more than any one of the above-described lower limits.

The lower limit of $R_{MAX}$ of Equation A above may be 7,000 ohms, 8,000 ohms, 9,000 ohms, 10,000 ohms, 11,000 ohms, 15,000 ohms, 16,000 ohms, 17,000 ohms, or 18,000 ohms or so, and the upper limit thereof may be 100,000 ohms, 95,000 ohms, 90,000 ohms, 85,000 ohms, 80,000 ohms, 75,000 ohms, 70,000 ohms, 65,000 ohms, 60,000 ohms, 55,000 ohms, 50,000 ohms, 45,000 ohms, 40,000 ohms, 35,000 ohms, 30,000 ohms, 25,000 ohms, 20,000 ohms, or 15,000 ohms or so. The $R_{MAX}$ may be within a range of more than or equal to, or more than any one of the above-described lower limits; or may also have a range between less than or equal to, or less than any one of the above-described upper limits and more than or equal to, or more than any one of the above-described lower limits.

The lower limit of the temperature at which the $R_{MAX}$ is confirmed may be 70°C, 75°C, 80°C, 85°C, or 90°C or so, and the upper limit thereof may be 135°C, 130°C, 120°C, 110°C, 100°C, 95°C, or 90°C or so. The temperature may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits. The fact that $R_{MAX}$ is the temperature means that an increase in the resistance of the conductive polymer occurs at the temperature or a temperature close to the temperature. Therefore, such temperature adjustment is important in terms of securing stable performance in a normal state while securing stability in an abnormal state.

The lower limit of the temperature at which the $R_{MIN}$ is confirmed may be 25°C, 26°C, 27°C, 28°C, 29°C, 30°C, 35°C, 40°C, 45°C, 50°C, 55°C, or 60°C or so, and the upper limit thereof may be 80°C, 75°C, 70°C, 65°C, 60°C, 55°C, 50°C, 45°C, 40°C, 39°C, 38°C, 37°C, 36°C, 35°C, 34°C, 33°C, 32°C, 31°C, 30°C, 29°C, 28°C, 27°C, 26°C, or 25°C or so. The temperature may be within a range of less than or equal to, or less than any one of the above-described upper limits; or may also have a range between less than or equal to, or less than any one of the above-described upper limits and more than or equal to, or more than any one of the above-described lower limits.

The lower limit of $R_{MIN}$ of Equation A may be 0 ohms, 5 ohms, 10 ohms, 15 ohms, 20 ohms, 25 ohms, 30 ohms, 35

ohms, or 40 ohms or so, and the upper limit thereof may be 100 ohms, 95 ohms, 90 ohms, 85 ohms, 80 ohms, 75 ohms, 70 ohms, 65 ohms, 60 ohms, 55 ohms, 50 ohms, 45 ohms, 40 ohms, 35 ohms, or 30 ohms or so. The $R_{MIN}$ may be within a range of less than or equal to, or less than any one of the above-described upper limits; or may also have a range between less than or equal to, or less than any one of the above-described upper limits and more than or equal to, or more than any one of the above-described lower limits.

The polymer layer, current collector, or electrode may exhibit a characteristic that ΔR1 of Equation 1 below is within a predetermined range.

[Equation 1]

$$\Delta R1 = Max\{(R_{n+5}/R_n)/5\}$$

In Equation 1, $R_n$ is the DC resistance at any temperature n°C within a range of 25°C to 135°C, and $R_{n+5}$ is the DC resistance at a temperature ((n+5)°C) 5°C higher than the temperature n°C, and Max{($R_{n+5}/R_n$)/5} is the maximum value among the ($R_{n+5}/R_n$)/5 values confirmed within the temperature range of 25°C to 135°C.

ΔR1 of Equation 1 can be measured in the above-described temperature range according to the method for measuring the DC resistance. In the method for identifying ΔR1, an initial temperature is 25°C and a final temperature is 135°C. The $R_{n+5}$ and $R_n$ are identified by measuring the DC resistance at each temperature while increasing the temperature by 5°C from the initial temperature of 25°C. For example, when n is 90, $R_{95}/R_{90}$ is the ratio of the DC resistance at 95°C to the DC resistance at 90°C. For example, the matter that ΔR1 exhibits 100/°C or more at any temperature within the temperature range of 25°C to 135°C means that the resistance of the polymer layer, current collector, or electrode increases relatively rapidly at any temperature within the temperature range.

The lower limit of the above ΔR1 may be about 80/°C, 90/°C, 100/°C, 150/°C, 200/°C, 250/°C, 300/°C, 350/°C, or 400/°C or so, and the upper limit thereof may be 1,000/°C, 950/°C, 900/°C, 850/°C, 800/°C, 750/°C, 700/°C, 650/°C, 600/°C, 550/°C, 500/°C, 450/°C, 400/°C, 350/°C, 300/°C, 250/°C, 200/°C, or 150/°C or so. The ΔR1 may be within a range of more than or equal to, or more than any one of the above-described lower limits; or may also have a range between less than or equal to, or less than any one of the above-described upper limits and more than or equal to, or more than any one of the above-described lower limits.

By securing the above characteristics, the current collector, or the electrode to which it is applied increases resistance under abnormally high temperature conditions caused by overcharge, high temperature exposure, or external impact, and the like, thereby blocking energization of the electrode assembly, whereby it is possible to secure stability.

The lower limit of the temperature at which the ΔR1 is confirmed, that is, the temperature at $R_n$, may be 70°C, 80°C, 81°C, 82°C, 83°C, 84°C, 85°C, 86°C, 87°C, 88°C, 89°C, 90°C, 91°C, 92°C, 93°C, 94°C, or 95°C or so, and the upper limit thereof may be 200°C, 190°C, 180°C, 170°C, 160°C, 150°C, 140°C, 130°C, 120°C, 110°C, 100°C, or 90°C or so. The temperature may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits. By designing the polymer layer, or the current collector or the electrode as described above, even when the normal state of the electrode, electrode assembly or secondary battery is maintained at a relatively high temperature, it is possible to ensure stability in an abnormal state while maintaining the performance of the electrode, electrode assembly or secondary battery.

The polymer layer, current collector or electrode can exhibit characteristics that ΔR2 of Equation 2 below is within a predetermined range.

[Equation 2]

$$\Delta R2 = Max\{(R_{z+5}/R_z)/5\}$$

In Equation 2, $R_z$ is the AC impedance resistance at any temperature n°C within a range of 25°C to 135°C, and $R_{z+5}$ is the AC impedance resistance at a temperature ((n+5)°C) 5°C higher than the temperature n°C, and Max {($R_{z+5}/R_z$)/5} is the maximum value among the ($R_{z+5}/R_z$)/5 values confirmed within the temperature range of 25°C to 135°C.

ΔR2 of Equation 2 can be measured in the temperature range according to the method for measuring the AC impedance resistance. In the method for identifying ΔR2, an initial temperature is 25°C and a final temperature is 135°C. The $R_{z+5}$ and $R_z$ are identified by measuring the AC impedance resistance at each temperature while increasing the temperature by 5°C from the initial temperature of 25°C. For example, when n is 90, $R_{95}/R_{90}$ is the ratio of the AC impedance resistance at 95°C to the AC impedance resistance at 90°C. For example, the matter that ΔR2 exhibits 10/°C or

more at any temperature within the temperature range of 25°C to 135°C means that the resistance of the polymer layer, current collector, or electrode increases relatively rapidly at any temperature within the temperature range.

The lower limit of the ΔR2 may be 8/°C, 10/°C, 12/°C, 14/°C, 16/°C, 18/°C, 20/°C, 22/°C, 24/°C, 26/°C, 28/°C, 30/°C, 33/°C, 34/°C, 36/°C, 38/°C, 40/°C, 42/°C, or 44/°C or so, and the upper limit thereof may be 100/°C, 95/°C, 90/°C, 85/°C, 80/°C, 75/°C, 70/°C, 65/°C, 60/°C, 55/°C, 50/°C, 45/°C, 40/°C, 35/°C, 30/°C, 25/°C, 20/°C, 18/°C, or 16/°C or so. The ΔR2 may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits.

By securing the above characteristics, the current collector or electrode increases resistance in an abnormal state, whereby it is possible to secure stability.

The lower limit of the temperature at which ΔR2 of the above range is confirmed, that is, the temperature at $R_z$, may be 80°C, 81°C, 82°C, 83°C, 84°C, 85°C, 86°C, 87°C, 88°C, 89°C, 90°C, 91°C, 92°C, 93°C, 94°C, or 95°C or so, and the upper limit thereof may be 200°C, 190°C, 180°C, 170°C, 160°C, 150°C, 140°C, 130°C, 120°C, 110°C, 100°C, or 90°C or so. The temperature may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits. By designing the electrode to exhibit the temperature as described above, even when the normal state of the current collector, electrode, electrode assembly, or secondary battery is maintained at a relatively high temperature, it is possible to ensure stability in an abnormal state while maintaining the performance of the electrode, electrode assembly, or secondary battery.

The polymer layer, current collector, or electrode can exhibit characteristics that the absolute value of ΔR3 of Equation 3 below is within a predetermined range.

[Equation 3]

$$\Delta R3 = 100 \times (C_1\text{-}C_2)/C_1$$

In Equation 3, $C_1$ is the discharged capacity at room temperature (about 25°C), and $C_2$ is the discharged capacity after storage at 70°C for 60 hours. $C_1$ and $C_2$ of Equation 3 are the discharged capacities measured for the coin cell to which the electrode is applied.

The upper limit of the absolute value of ΔR3 in Equation 3 may be 10%, 9.5%, 9%, 8.5%, 8%, 7.5%, 7%, 6.5%, 6%, 5.5%, 5%, 4.5%, 4%, 3.5%, 3%, 2.5%, 2%, 1.5%, 1%, or 0.5% or so, and the lower limit thereof may be 0%, 0.5%, or 1.5% or so. The range of the absolute value may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits. By designing it so that the above characteristics are secured, even when the normal state of the electrode, electrode assembly, or secondary battery is maintained at a relatively high temperature, it is possible to ensure stability in an abnormal state while maintaining the performance of the electrode, electrode assembly, or secondary battery.

The polymer layer, current collector, or electrode can exhibit characteristics that the absolute value of ΔR4 of Equation 4 below is within a predetermined range.

[Equation 4]

$$\Delta R4 = 100 \times (C_1\text{-}C_3)/C_1$$

In Equation 4, $C_1$ is the discharged capacity at room temperature (about 25°C), and $C_3$ is the discharged capacity after storage at 130°C for 10 minutes. $C_1$ and $C_3$ of Equation 4 are the discharged capacities measured for the coin cell to which the electrode is applied.

The lower limit of the absolute value of ΔR4 in Equation 4 may be 20%, 22%, 24%, 26%, 28%, 30%, 32%, 34%, 36%, 38%, 40%, 42%, 44%, 46%, 48%, 50%, 52%, 54%, 56%, 58%, 60%, 62%, 64%, 66%, 68%, 70%, 72%, 74%, or 76% or so, and the upper limit thereof may be 200%, 180%, 160%, 140%, 120%, 100%, 95%, 90%, 85%, 80%, 75%, 70%, 65%, or 60% or so. The range of the absolute value may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits. By designing the electrode so that the

above characteristics are secured, it is possible to ensure stability in an abnormal state.

The above characteristics can be achieved through introduction of a polymer layer to be described below.

The current collector body is not particularly limited, and one commonly used as a current collector body for the positive electrode or negative electrode can be used.

If the current collector body has conductivity without causing chemical changes in applied devices such as secondary batteries, the type, size, and shape thereof, and the like are not particularly limited. An example of a material that can be used as the current collector body may include copper, aluminum, stainless steel, nickel, titanium, or calcined carbon, and the like, or may be exemplified by a material, and the like in which the surface of copper, aluminum, or stainless steel is surface-treated with carbon, nickel, titanium, or silver, and the like. The current collector body may be in the form of a film, sheet, foil, net, porous body, foam, or nonwoven fabric, and the like, which comprises the above material. In some cases, a known surface treatment may also be performed on the surface of the current collector body to improve adhesive force to other layers such as a polymer layer or an active material layer.

Such a current collector body may typically have a thickness within a range of 3μm to 500 μm, but is not limited thereto.

A layer that is usually applied may also be used as the active material layer used to form the electrode. Typically, the active material layer comprises an electrode active material. The specific type of the electrode active material is not particularly limited, and materials to form a positive electrode or a negative electrode can usually be used.

For example, when the active material layer is a positive electrode active material layer, the electrode active material may include layered compounds such as lithium cobalt oxide ($LiCoO_2$) or lithium nickel oxide ($LiNiO_2$), or compounds substituted with one or more transition metals; lithium iron oxides such as $LiFe_3O_4$; lithium manganese oxides such as Formula $Li_{1+c1}Mn_{2-c1}O_4$ ($0 \leq c1 \leq 0.33$), $LiMnO_3$, $LiMn_2O_3$, or $LiMnO_2$; lithium copper oxides ($Li_2CuO_2$); vanadium oxides such as $LiV_3O_8$, $V_2O_5$, or $Cu_2V_2O_7$; Ni-site lithium nickel oxides represented by Formula $LiNi_{1-c2}M_{c2}O_2$ (where M is at least one selected from the group consisting of Co, Mn, Al, Cu, Fe, Mg, B and Ga, and $0.01 \leq c2 \leq 0.3$ is satisfied); lithium manganese composite oxides represented by Formula $LiMn_{2-c3}M_{c3}O_2$ (where M is at least one selected from the group consisting of Co, Ni, Fe, Cr, Zn, and Ta, and $0.01 \leq c3 \leq 0.1$ is satisfied) or $Li_2Mn_3MO_8$ (here, M is at least one selected from the group consisting of Fe, Co, Ni, Cu and Zn); lithium nickel cobalt manganese (NCM) composite oxides, lithium nickel cobalt manganese aluminum (NCMA) composite oxides, and $LiMn_2O_4$ in which a part of Li in the formula is substituted with alkaline earth metal ions, and the like, but is not limited thereto.

When the active material layer is a negative electrode active material layer, as the electrode active material, for example, a compound capable of reversible intercalation and deintercalation of lithium may be used. A specific example may include carbonaceous materials such as artificial graphite, natural graphite, graphitized carbon fiber, and amorphous carbon; metallic compounds capable of alloying with lithium, such as Si, Al, Sn, Pb, Zn, Bi, In, Mg, Ga, Cd, Si alloy, Sn alloy, or Al alloy; metal oxides capable of doping and de-doping lithium, such as $SiO_a$ ($0 < a < 2$), $SnO_2$, vanadium oxide, and lithium vanadium oxide; or a composite comprising the metallic compound and the carbonaceous materials such as a Si-C composite or a Sn-C composite, and the like, and any one or a mixture of two or more of the foregoing may be used.

A metal lithium thin film may also be used as the negative electrode active material, and as the carbon material, low crystalline carbon and high crystalline carbon, and the like may also be used. As the low crystalline carbon, soft carbon and hard carbon are representative, and as the high crystalline carbon, high-temperature baked carbons such as amorphous, plate-like, scale-like, spherical, or fibrous natural graphite or artificial graphite, Kish graphite, pyrolytic carbon, mesophase pitch based carbon fiber, mesocarbon microbeads, mesophase pitches, and petroleum and coal tar pitch derived cokes are representative.

The electrode active material may be included in the active material layer within a range of about 80 wt% to 99.5 wt%, or within a range of 88 wt% to 99 wt% relative to the total weight of the active material layer, but the ratio may be changed depending on the use or design of the electrode.

The active material layer may further comprise a binder. The binder serves to improve attachment between the active materials, and adhesive force on between the active material layer and the current collector body. An example of the binder is not particularly limited, and one or more may be selected from the group consisting of, for example, PVDF (poly(vinylidene fluoride), PVA (poly(vinyl alcohol)), SBR (styrene butadiene rubber), PEO (poly(ethylene oxide)), CMC (carboxyl methyl cellulose), cellulose acetate, cellulose acetate butylate, cellulose acetate propionate, cyanoethylpullulan, cyanoethyl polyvinyl alcohol, cyanoethyl cellulose, cyanoethyl sucrose, pullulan, polymethylmethacrylate, polybutylacrylate, polyacrylonitrile, polyvinylpyrrolidone, polyvinyl acetate, polyethylene-co-vinyl acetate, and polyarylate, and used.

In one example, the binder may be included in the active material layer within a range of 0.1 parts by weight to 10 parts by weight, or 0.5 parts by weight to 5 parts by weight relative to 100 parts by weight of the electrode active material, but is not limited thereto.

The active material layer may further comprise a conductive material, as needed. If the conductive material has conductivity without causing chemical changes in the secondary battery, it is not particularly limited, any known material can be used. For example, graphite such as natural graphite or artificial graphite; carbon black, such as carbon black,

acetylene black, Ketjen black, channel black, furnace black, lamp black, or thermal black; conductive fibers such as carbon fibers or metal fibers; conductive tubes such as carbon nanotubes (CNTs); metal powders such as fluorocarbon, aluminum, or nickel powder; conductive whiskers such as zinc oxide or potassium titanate; conductive metal oxides such as titanium oxide; conductive materials such as polyphenylene derivatives, and the like may be used.

In one example, the conductive material may be included in the active material layer in an amount of 0.1 parts by weight to 20 parts by weight, or 0.3 parts by weight to 10 parts by weight relative to 100 parts by weight of the electrode active material, but is not limited thereto.

The active material layer may also optionally further comprise any necessary known components in addition to the above-described components.

The polymer layer present on the current collector body may comprise a conductive polymer. As is known, the conductive polymer is a polymer exhibiting conductivity by a conjugated system and/or doping of a polymer chain, and the like.

As the conductive polymer, a polymer having a so-called PTC (Positive Temperature Coefficient) characteristic may be used, and by controlling the PTC characteristic of the polymer, it is possible to effectively form an electrode exhibiting the above-described characteristics.

The polymer layer may comprise only the conductive polymer, or may further comprise the conductive polymer and other necessary additives. In one example, the lower limit of the amount of the conductive polymer in the polymer layer may be 50 wt%, 55 wt%, 60 wt%, 65 wt%, 70 wt%, 75 wt%, 80 wt%, 85 wt%, 90 wt%, or 95 wt% or so based on the total weight of the polymer layer, and the upper limit thereof may also be 100 wt%, 95 wt%, 90 wt%, or 85 wt% or so based on the total weight of the polymer layer. The range of the amount may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits.

The polymer layer is a layer distinct from the above-described active material layer, and specifically, the polymer layer is distinct from the active material layer in that the amount of the electrode active material included in the active material layer is limited, or it does not include the electrode active material. For example, the upper limit of the amount of the electrode active material in the polymer layer may be 10 wt%, 9 wt%, 8 wt%, 7 wt%, 6 wt%, 5 wt%, 4 wt%, 3 wt%, 2 wt%, 1 wt%, 0.5 wt%, or 0.1 wt% or so based on the total weight of the polymer layer, and the lower limit thereof may also be 0 wt%, 0.1 wt%, 0.5 wt%, or 1 wt% or so based on the total weight of the polymer layer. The range of the amount may be within a range of less than or equal to, or less than any one of the above-described upper limits; or may also have a range between less than or equal to, or less than any one of the above-described upper limits and more than or equal to, or more than any one of the above-described lower limits.

The conductive polymer may have a weight average molecular weight within a predetermined range. The lower limit of the weight average molecular weight in the conductive polymer may be 10,000 g/mol, 15,000 g/mol, 20,000 g/mol, 25,000 g/mol, 30,000 g/mol, 35,000 g/mol, 40,000 g/mol, 45,000 g/mol, 50,000 g/mol, 55,000 g/mol, 60,000 g/mol, 65,000 g/mol, 70,000 g/mol, 75,000 g/mol, 80,000 g/mol, 85,000 g/mol, 90,000 g/mol, 95,000 g/mol, 100,000 g/mol, 105,000 g/mol, 110,000 g/mol, 115,000 g/mol, 120,000 g/mol, 125,000 g/mol, 130,000 g/mol, 135,000 g/mol, 140,000 g/mol, 145,000 g/mol, or 150,000 g/mol or so, and the upper limit thereof may also be 1,000,000 g/mol, 950,000 g/mol, 900,000 g/mol, 850,000 g/mol, 800,000 g/mol, 750,000 g/mol, 700,000 g/mol, 650,000 g/mol, 600,000 g/mol, 550,000 g/mol, 500,000 g/mol, 450,000 g/mol, 400,000 g/mol, 350,000 g/mol, 300,000 g/mol, 250,000 g/mol, 200,000 g/mol, 150,000 g/mol, or 110,000 g/mol or so. The weight average molecular weight may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits. By using the conductive polymer having such a weight average molecular weight, it is possible to effectively form a polymer layer, and an electrode, having desired properties.

The molecular weight distribution of the conductive polymer, that is, the ratio of the weight average molecular weight (Mw) to the number average molecular weight (Mn), may be within a predetermined range. The lower limit of the molecular weight distribution may be 2, 2.5, 3, 3.5, or 4 or so, and the upper limit thereof may be 8, 7.5, 7, 6.5, 6, 5.5, 5, 4.5, 4, or 3.5 or so. The molecular weight distribution may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits. By using the conductive polymer having such a molecular weight distribution, it is possible to effectively form a polymer layer, a current collector, and an electrode, having desired properties.

The weight average molecular weight and molecular weight distribution can be measured in the manner described in "2. GPC (Gel Permeation Chromatograph)" of Example sections in this specification.

The conductive polymer may be a polythiophene or a thiophene polymer. By applying the polythiophene or

thiophene polymer as the conductive polymer, it is possible to efficiently form a desired polymer layer. In this specification, the term polythiophene or thiophene polymer means a polymer containing thiophene units in a certain level or more. The thiophene unit means a monomer unit formed by polymerizing a thiophene-based monomer, and the thiophene-based monomer means a monomer containing a thiophene skeleton.

The term monomer unit means a structure in which a monomer is polymerized and included in the polymer.

The lower limit of the ratio of the thiophene unit in the thiophene polymer may be about 50 mol%, 55 mol%, 60 mol%, 65 mol%, 70 mol%, 75 mol%, 80 mol%, 85 mol%, or 90 mol% or so relative to the total polymerization units of the polymer, and the upper limit thereof may be 100 mol%, 95 mol%, 90 mol%, 85 mol%, 80 mol%, 75 mol%, 70 mol%, 65 mol%, 60 mol%, or 55 mol% or so. The ratio of the thiophene unit may be within a range of more than or equal to, or more than any one of the above-described lower limits; or may also have a range between less than or equal to, or less than any one of the above-described upper limits and more than or equal to, or more than any one of the above-described lower limits.

The conductive polymer may comprise, as the thiophene unit, a unit of Formula A below.

[Formula A]

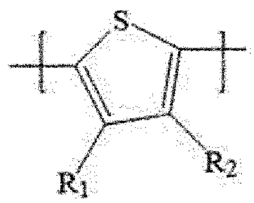

In Formula A, $R_1$ and $R_2$ may each independently be hydrogen, a polar functional group, or a hydrocarbon functional group.

In another example, $R_1$ and $R_2$ of Formula A may also be linked to each other to form a divalent functional group of Formula B below.

[Formula B]

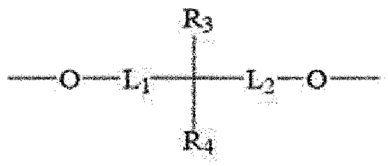

In Formula B, $L_1$ and $L_2$ may each independently be a single bond, an alkylene group, or an alkylidene group, and $R_3$ and $R_4$ may each independently be hydrogen, the polar functional group, or the hydrocarbon functional group.

In Formula A, when $R_1$ and $R_2$ are each independently hydrogen, the polar functional group, or the hydrocarbon functional group, at least one of $R_1$ and $R_2$ may be the polar functional group or the hydrocarbon functional group.

In Formula A, when $R_1$ and $R_2$ form the divalent functional group of Formula B above, at least one of $R_3$ and $R_4$ may be the polar functional group or the hydrocarbon functional group.

In this specification, the term alkylene group means a divalent functional group formed by removing hydrogen atoms from two different carbon atoms, respectively, in an alkane, and the term alkylidene group means a divalent functional group formed by removing two hydrogen atoms from one carbon atom in an alkane.

In this specification, unless specifically defined otherwise, the term alkylene group may be an alkylene group with 2 to 20 carbon atoms, 2 to 16 carbon atoms, 2 to 12 carbon atoms, 2 to 8 carbon atoms, or 2 to 4 carbon atoms. The alkylene group may be linear or branched or cyclic, which may also be optionally substituted with one or more substituents.

In this specification, unless specifically defined otherwise, the term alkylidene group may be an alkylidene group with 1 to 20 carbon atoms, 1 to 16 carbon atoms, 1 to 12 carbon atoms, 1 to 8 carbon atoms, or 1 to 4 carbon atoms. The alkylidene group may be linear or branched or cyclic, which may also be optionally substituted with one or more substituents.

In this specification, the term hydrocarbon functional group means a monovalent hydrocarbon group (i.e., a monovalent functional group composed of carbon and hydrogen), or a monovalent functional group including the monovalent hydrocarbon group. Therefore, the hydrocarbon functional group may also include other atoms in addition to carbon and hydrogen. An example of the monovalent hydrocarbon group includes an alkyl group, an alkynyl group, or an alkenyl group, and an example of the monovalent functional group including the monovalent hydrocarbon group includes

an alkoxy group, an alkylcarbonyl group, or an alkylcarbonyloxy group, but the type of the hydrocarbon functional group is not limited thereto.

The hydrocarbon functional group is a functional group capable of imparting appropriate mobility to the polymerization process of the conductive polymer or the conductive polymer itself. A monomer including such a functional group imparts appropriate mobility to a monomer mixture, and diffuses within the monomer mixture to enable polymerization to occur with excellent efficiency. Also, the conductive polymer having the hydrocarbon functional group can enable a polymer layer to be formed stably and uniformly between the current collector body and the active material layer through appropriate mobility, and particularly, can form the polymer layer more effectively through interaction with an additive to be described below.

Upon application of a certain amount of heat energy, the hydrocarbon functional group vibrates due to the heat, and dedoping of anions bound to the copolymer are promoted by this vibration (thermal vibration), and accordingly, the resistance increase is induced. The temperature at which the thermal vibration occurs can be controlled by the length and/or amount of the hydrocarbon functional group. For example, under the same temperature, the thermal vibration of a relatively long chain is greater than that of a relatively short chain, whereby the long chain can induce a resistance increase effect at a relatively low temperature. Therefore, the desired PTC effect can be set through control of the length and/or ratio of the hydrocarbon functional group.

In the type of the hydrocarbon functional group, the specific type is not particularly limited if it plays the above role, but a hydrocarbon functional group forming a chain structure having a length of a certain level or more may be appropriately applied in the present application.

For example, the lower limit of the carbon number of the hydrocarbon functional group may be 3, 4, 5, 6, 7, 8, 9, 10, 11, or 12 or so, and the upper limit thereof may also be 20, 19, 18, 17, 16, 15, 14, 13, 12, 11, 10, 9, 8, 7, or 6 or so. The carbon number of the hydrocarbon functional group may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits.

The carbon number may be the total carbon number of the hydrocarbon functional group or the monovalent hydrocarbon group included therein, or the carbon number of the hydrocarbon chain with the longest linear structure included in the hydrocarbon functional group or the monovalent hydrocarbon group included therein. That is, the hydrocarbon functional group or the monovalent hydrocarbon group may have a linear structure or a branched structure, and even in the case of the branched structure, the carbon number constituting the longest linear chain in the branched structure may be within the above range. For example, if the branched structure is a 2-ethylhexyl group, the carbon number constituting the longest chain is 6.

The hydrocarbon functional group may have, for example, a linear or branched structure. In a specific example, the hydrocarbon functional group may be a linear or branched alkyl group, alkenyl group, or alkynyl group, or may be an alkoxy group, alkylcarbonyl group, or alkylcarbonyloxy group including an alkyl group with a linear or branched structure. In this case, the carbon number of the alkyl group, alkenyl group or alkynyl group, or the alkyl group of the alkoxy group, alkylcarbonyl group or alkylcarbonyloxy group may be within the range of the carbon number of the hydrocarbon functional group. Such a hydrocarbon functional group may be optionally substituted with one or more substituents, and even in this case, the carbon number may be within the above-described range.

The polar functional group is a functional group containing one or two or more polar atoms, for example, oxygen and/or nitrogen. An example of such a functional group includes a carboxyl group, a hydroxy group, an amino group, a cyano group, a nitro group, an ether group, or a functional group of Formula 5 below.

[Formula 5]

$$-L_5-O-\left[L_6-O\right]_n-R_9$$

In Formula 5, $L_5$ is a single bond, an alkylene group, or an alkylidene group, $L_6$ is an alkylene group or an alkylidene group, $R_5$ is hydrogen or an alkyl group, and n is a number in a range of 1 to 10.

In Formula 5, the matter that $L_5$ is a single bond means a form in which $L_5$ does not exist, and the oxygen atom between $L_5$ and $L_6$ is directly connected to the backbone of a monomer or polymer.

In one example, the alkyl group of $R_9$ in Formula 5 may be an alkyl group with 1 to 20 carbon atoms, 1 to 16 carbon atoms, 1 to 12 carbon atoms, 1 to 8 carbon atoms or 1 to 4 carbon atoms, or may be a methyl group or an ethyl group. The alkyl group may be linear, branched, or cyclic, and may be suitably linear or branched.

The alkylene groups of $L_5$ and $L_6$ in Formula 5 may each be, in one example, an alkylene group with 2 to 20 carbon

atoms, 2 to 16 carbon atoms, 2 to 12 carbon atoms, 2 to 8 carbon atoms, or 2 to 4 carbon atoms, or may be an ethylene group or a propylene group. The alkylene group may be linear, branched, or cyclic, and may be suitably linear or branched.

The alkylidene groups of $L_5$ and $L_6$ in Formula 5 may each be, in one example, an alkylidene group with 1 to 20 carbon atoms, 1 to 16 carbon atoms, 1 to 12 carbon atoms, 1 to 8 carbon atoms, or 1 to 4 carbon atoms, or may be a methylidene group, an ethylidene group, or a propylidene group. The alkylidene group may be linear, branched, or cyclic, and may be suitably linear or branched.

The lower limit of n in Formula 5 may be 1, 2, 3, or 4 or so, and the upper limit thereof may be 10, 9, 8, 7, 6, 5, 4, or 3 or so. The n may be within a range of less than or equal to, or less than any one of the above-described upper limits; or within a range of more than or equal to, or more than any one of the above-described lower limits; or within a range between less than or equal to, or less than any one of the above-described upper limits and more than or equal to, or more than any one of the above-described lower limits.

Through the application of the polar functional group, the polymer layer comprising the conductive polymer may be bonded to other layers to have an appropriate bonding force, and the desired protective function may be efficiently achieved by uniformly forming the conductive polymer layer.

In the conductive polymer, the lower limit of the mole number of the unit of Formula A above may be 50 mol%, 55 mol%, 60 mol%, 65 mol%, 70 mol%, 75 mol%, 80 mol%, 85 mol%, 90 mol%, or 95 mol% or so relative to the total polymerization units, and the upper limit thereof may be 100 mol%, 95 mol%, 90 mol%, 85 mol%, 80 mol%, 75 mol%, 70 mol%, 65 mol%, 60 mol%, or 55 mol% or so. The ratio may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits.

To exhibit appropriate characteristics, as the conductive polymer, a conductive polymer including a thiophene unit (hereinafter, may be referred to as a first thiophene unit) having a relatively long-chain hydrocarbon functional group and a thiophene unit (hereinafter, may be referred to as a second thiophene unit) having a relatively short-chain hydrocarbon functional group, as the hydrocarbon functional group, may be used. Such a conductive polymer is a conductive copolymer.

The lower limit of the carbon number of the long-chain hydrocarbon functional group may be 10, 11, or 12 or so, and the upper limit thereof may be 20, 19, 18, 17, 16, 15, 14, 13, 12, 11, or 10 or so. The carbon number of the long-chain hydrocarbon functional group may be within a range of more than or equal to, or more than any one of the above-described lower limits; or may also have a range between less than or equal to, or less than any one of the above-described upper limits and more than or equal to, or more than any one of the above-described lower limits.

The lower limit of the carbon number of the short-chain hydrocarbon functional group may be 3, 4, 5, 6, 7, or 8 or so, and the upper limit thereof may be 9, 8, 7, or 6 or so. The carbon number of the short-chain hydrocarbon functional group may be within a range of less than or equal to, or less than any one of the above-described upper limits; or may also have a range between less than or equal to, or less than any one of the above-described upper limits and more than or equal to, or more than any one of the above-described lower limits.

With respect to the long-chain and short-chain hydrocarbon functional groups, other matters except for the above-described carbon number, such as the meaning of the carbon number, the specific type of the functional group, and the like, follow the contents described for the hydrocarbon functional group.

Therefore, specific types of the long-chain and short-chain hydrocarbon functional groups may include a linear or branched alkyl group, alkenyl group or alkynyl group, or a linear or branched alkoxy group, alkylcarbonyl group or alkylcarbonyloxy group, and the carbon number of the alkyl group, alkenyl group or alkynyl group, or the alkyl group of the alkoxy group, alkylcarbonyl group or alkylcarbonyloxy group may be within the above-described range.

In the conductive copolymer, the lower limit of the ratio of the total mole number of the first and second thiophene units based on the mole number of the total monomer units of the conductive copolymer may be 80 mol%, 82 mol%, 84 mol%, 86 mol%, or 86 mol% or so, and the upper limit thereof may be 99 mol%, 97 mol%, 95 mol%, 93 mol%, 91 mol%, or 90 mol% or so. The ratio may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits.

The lower limit of the ratio (M2/M1) of the mole number (M2) of the second thiophene unit to the mole number (M1) of the first thiophene unit in the conductive copolymer may be 0.01, 0.05, 0.1, 0.5, 1, 1.5, or 2 or so, and the upper limit thereof may be 100, 95, 90, 85, 80, 75, 70, 65, 60, 55, 50, 45, 40, 35, 30, 25, 20, 15, 10, 9, 8, 7, 6, 5, 4, 3, 2, 1, or 0.7 or so. The ratio may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits.

Under such a ratio, the conductive copolymer or the polymer layer exhibits an appropriate PTC (positive

temperature coefficient) effect, and its surface characteristics are adjusted, whereby it is possible to ensure excellent adhesive force in an electrode or a current collector.

In one example, the first thiophene unit may be represented by Formula 1 below.

[Formula 1]

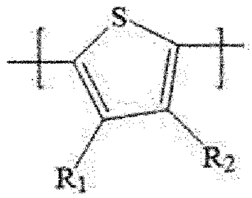

In Formula 1, $R_1$ and $R_2$ may each independently be hydrogen or the long-chain hydrocarbon functional group. In this case, at least one of $R_1$ and $R_2$ may be the long-chain hydrocarbon functional group.

In another example, $R_1$ and $R_2$ may be linked to each other to form a divalent functional group of Formula 2 below.

[Formula 2]

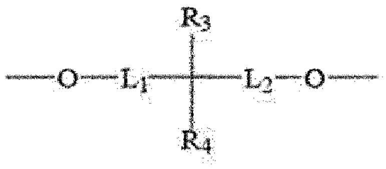

In Formula 2, $L_1$ and $L_2$ may each independently be a single bond, an alkylene group, or an alkylidene group, and $R_3$ and $R_4$ may each independently be hydrogen or the long-chain hydrocarbon functional group, wherein at least one of $R_3$ and $R_4$ may be the long-chain hydrocarbon functional group.

The specific details of the long-chain hydrocarbon functional group are as described above, and the specific details of the alkylene group or alkylidene group are as described in Formulas A, B, and 5 above.

The second thiophene unit may be represented by Formula 3 below.

[Formula 3]

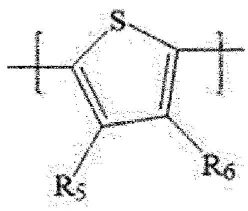

In Formula 3, $R_5$ and $R_6$ may each independently be hydrogen or the short-chain hydrocarbon functional group, and in this case, at least one of $R_5$ and $R_6$ may be the short-chain hydrocarbon functional group.

In another example, $R_5$ and $R_6$ may be linked to each other to form a divalent functional group of Formula 4 below.

[Formula 4]

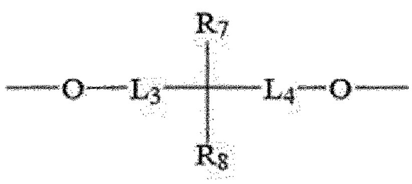

In Formula 4, $L_3$ and $L_4$ are each independently a single bond, an alkylene group, or an alkylidene group, and $R_7$

and $R_8$ are each independently hydrogen or the short-chain hydrocarbon functional group, wherein at least one of $R_7$ and $R_8$ is the short-chain hydrocarbon functional group.

The specific details of the short-chain hydrocarbon functional group are as described above, and the specific details of the alkylene group and the alkylidene group are as described in Formulas A, B, and 5 above.

The conductive polymer may also further comprise a necessary unit together with the unit.

For example, the conductive polymer may further comprise a thiophene unit (hereinafter, may be referred to as a third thiophene unit) having the polar functional group.

Here, an example of the polar functional group is as described above.

Through the application of the polar functional group, the polymer layer comprising the conductive polymer may be bonded to other layers to have an appropriate bonding force, and the desired protective function may be efficiently achieved by uniformly forming the conductive polymer layer.

The third thiophene unit may be represented by, for example, Formula 6 below.

[Formula 6]

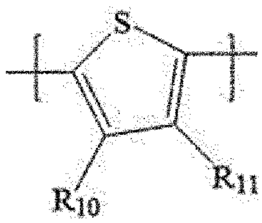

In Formula 6, $R_{10}$ and $R_{11}$ may each independently be hydrogen or the polar functional group, and in this case, at least one of $R_{10}$ and $R_{11}$ is the polar functional group.

In another example, $R_{10}$ and $R_{11}$ of Formula 6 may be linked to each other to form a divalent functional group of Formula 7 below.

[Formula 7]

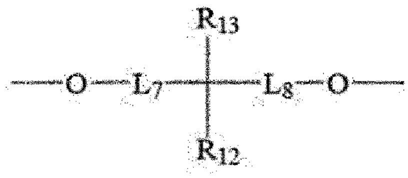

In Formula 7, $L_7$ and $L_8$ are each independently a single bond, an alkylene group, or an alkylidene group, and $R_{12}$ and $R_{13}$ are each independently hydrogen or a polar functional group, wherein at least one of $R_{12}$ and $R_{13}$ is the polar functional group.

The specific details of the polar functional group are as described above, and the specific details of the alkylene group or alkylidene group are as described in Formulas A, B, and 5 above.

When the third thiophene unit is present in the conductive copolymer, the third thiophene unit may be present such that the total mole number of the first and second thiophene units is within a predetermined range per mole of the third thiophene unit.

For example, the lower limit of the ratio (i.e., M/M3) of the total mole number (M) of the first and second thiophene units per mole of the third thiophene unit (M3) may be 1 mol, 2 mol, 3 mol, 4 mol, 5 mol, 6 mol, 8 mol, 8.5 mol, 9 mol, 10 mol, 11 mol, 12 mol, 13 mol, 14 mol, 15 mol, 16 mol, 17 mol, or 19 mol or so, and the upper limit thereof may be 500 mol, 450 mol, 400 mol, 350 mol, 300 mol, 250 mol, 200 mol, 150 mol, 100 mol, 95 mol, 90 mol, 85 mol, 80 mol, 75 mol, 70 mol, 65 mol, 60 mol, 55 mol, 50 mol, 45 mol, 40 mol, 35 mol, 30 mol, 25 mol, 20 mol, 15 mol, or 10 mol or so. The ratio may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits.

When the first to third thiophene units are present in the conductive polymer, the lower limit of the ratio of the total mole number of the first to third thiophene units in the conductive polymer may be 50 mol%, 55 mol%, 60 mol%, 65 mol%, 70 mol%, 75 mol%, 80 mol%, 85 mol%, 90 mol%, or 95 mol% or so relative to the total polymerization units, and the upper limit thereof may be 100 mol%, 95 mol%, 90 mol%, 85 mol%, 80 mol%, 75 mol%, 70 mol%, 65 mol%, 60 mol%, or 55 mol%

or so. The ratio may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits.

The conductive polymer may further comprise other polymerization units if it comprises the above-described units in the above ratio.

The polymer layer may comprise the conductive polymer, and accordingly, it may exhibit the above-described properties.

The polymer layer may also comprise any additional component if it comprises the conductive polymer.

For example, the polymer layer may further comprise a conductive material together with the conductive polymer. As the conductive material, a material having appropriate conductivity may be used, and for example, as the conductive material, one, or two or more selected from carbon particles, carbon fibers, graphene, graphite, carbon black, and carbon nanotubes may be used.

As the conductive material, an appropriate type may be selected and used from the above-described types, and the material may be in the form of particles (spherical, irregular, or other shapes), plates or fibers, and the like, but is not limited thereto.

The size of the conductive material may also be appropriately adjusted as needed. For example, the lower limit of the size of the conductive material may be 10 nm, 50 nm, 100 nm, 150 nm, 200 nm, 250 nm, 300 nm, 350 nm, 400 nm, 450 nm, 500 nm, 550 nm, 600 nm, 650 nm, 700 nm, 750 nm, 800 nm, 850 nm, 900 nm, 950 nm, 1000 nm, 5000 nm, or 10000 nm or so, and the upper limit thereof may also be 100000 nm, 90000 nm, 80000 nm, 70000 nm, 60000 nm, 50000 nm, 40000 nm, 30000 nm, 20000 nm, 10000 nm, 5000 nm, 1000 nm, 950 nm, 900 nm, 850 nm, 800 nm, 750 nm, 700 nm, 650 nm, 600 nm, 550 nm, 500 nm, 450 nm, 400 nm, 350 nm, 300 nm, 250 nm, 200 nm, 200 nm, or 150 nm or so. The size may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits. When the conductive material is in the form of particles, the size may be the average diameter (so-called D50 particle diameter); when it is in the form of plates, the size may be the thickness, long side, or cross section; and when it is in the form of fibers, the size may be the diameter or length of the cross section.

When the conductive material is in the form of fibers, the lower limit of the aspect ratio (length/cross-sectional diameter) may be 5, 10, 15, 20, 25, 30, 35, 40, 45, 50, 55, 60, or 65, and the upper limit thereof may be 200, 195, 190, 185, 180, 175, 170, 165, 160, 155, 150, 145, 140, 135, 130, 125, 120, 115, 110, 105, 100, 95, 90, 85, 80, 75, or 70 or so. The aspect ratio may be within a range of less than or equal to, or less than any one of the above-described upper limits; or within a range of more than or equal to, or more than any one of the above-described lower limits; or within a range between less than or equal to, or less than any one of the above-described upper limits and more than or equal to, or more than any one of the above-described lower limits.

If necessary, the conductive material may also be surface-treated, considering dispersibility, and the like.

In this case, a surface-treating agent having appropriate compatibility with the conductive polymer may be used as the surface-treating agent. For example, the conductive material may be surface-treated with a polyphenol-based compound as the surface-treating agent. The polyphenol-based compound means a compound comprising a structure containing two or more hydroxy groups substituted and connected to benzene. Such a compound may be exemplified by a so-called catechol-based compound (i.e., catechol or a compound containing the relevant structure), and an example thereof includes dopamine, polydopamine, 3,4-dihydroxy phenyl alanine, norepinephrine, tannic acid, humic acid and/or lignin, and the like, but is not limited thereto.

A method of surface-treating a conductive material with such a surface-treating agent is not limited, and for example, a method of mixing the conductive material and the surface-treating agent in an appropriate solvent, and the like, or a method of synthesizing or polymerizing the surface-treating agent on the surface of the conductive material may be applied.

When the conductive material is used, the lower limit of the amount of the conductive material in the polymer layer relative to 100 parts by weight of the conductive polymer may be 0.5 parts by weight, 1 part by weight, 2 parts by weight, 3 parts by weight, 4 parts by weight, 5 parts by weight, 6 parts by weight, 7 parts by weight, 8 parts by weight, 9 parts by weight, 10 parts by weight, 11 parts by weight, 12 parts by weight, 13 parts by weight, 14 parts by weight, 15 parts by weight, 16 parts by weight, 17 parts by weight, 18 parts by weight, 19 parts by weight, or 20 parts by weight or so, and the upper limit thereof may be 50 parts by weight, 48 parts by weight, 46 parts by weight, 44 parts by weight, 42 parts by weight, 40 parts by weight, 38 parts by weight, 36 parts by weight, 34 parts by weight, 32 parts by weight, 30 parts by weight, 28 parts by weight, 26 parts by weight, 24 parts by weight, 22 parts by weight, 20 parts by weight, 18 parts by weight, 16 parts by weight, 14 parts by weight, 12 parts by weight, or 10 parts by weight or so. The amount may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits.

Under such a ratio, the conductive material appropriately interacts with the conductive polymer, so that a polymer layer with a desired shape can be effectively formed.

The polymer layer may further comprise, as an additive component, an aralkyl-modified silicone compound. Such a compound is mixed with the conductive polymer, so that the polymer layer can be stably formed on the current collector body and between the current collector body and the active material layer. It is predicted that the aralkyl group included in the silicone compound interacts with a flowable functional group, and the like, present in the conductive polymer to exhibit the above effect.

An aryl group present in the aralkyl group may be a monovalent functional group formed by removing one hydrogen atom from benzene, a benzene derivative, a compound having a structure in which two or more benzenes are connected by sharing one, or two or more carbons, or are connected by a linker, or a derivative thereof. The lower limit of the carbon number of such an aryl group may be 6, 7, 8, 9, 10, 11, or 12 or so, and the upper limit thereof may also be 30, 28, 26, 24, 22, 20, 18, 16, 14, 12, 10, 8, or 6 or so. The carbon number may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits. An example of the aryl group includes a phenyl or naphthyl group, and the like, but is not limited thereto.

The lower limit of the carbon number of the alkyl group present in the aralkyl group may be 1, 2, 3, 4, 5, 6, 7, 8, 9, 10, 11, 12, 13, 14, 15, 16, 17, 18, or 19 or so, and the upper limit thereof may also be 20, 19, 18, 17, 16, 15, 14, 13, 12, 11, 10, 9, 8, 7, 6, 5, 4, 3, or 2 or so. The carbon number may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits. The alkyl group may be linear, branched, or cyclic, and may also be substituted with one or more substituents rather than the aryl group, if necessary.

The specific type of the silicone compound is not particularly limited if it is modified by the aralkyl group. For example, the silicone compound may be an aralkyl modified polymethylalkylsiloxane. The lower limit of the carbon number of the alkyl group present in the polymethylalkylsiloxane may be 1, 2, 3, 4, 5, 6, 7, 8, 9, 10, 11, 12, 13, 14, 15, 16, 17, 18, or 19 or so, and the upper limit thereof may also be 20, 19, 18, 17, 16, 15, 14, 13, 12, 11, 10, 9, 8, 7, 6, 5, 4, 3, or 2 or so. The carbon number may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits. The alkyl group may be linear, branched, or cyclic, and may also be substituted with one or more substituents, if necessary.

Such additives are known in the industry variously, and for example, BYK-Chemie's BYK-323, and the like may be used as the additive.

When the silicone compound is used, the lower limit of the amount of the silicone compound in the polymer layer relative to 100 parts by weight of the conductive polymer may be 0.5 parts by weight, 1 part by weight, 2 parts by weight, 3 parts by weight, 4 parts by weight, 5 parts by weight, 6 parts by weight, 7 parts by weight, 8 parts by weight, 9 parts by weight, 10 parts by weight, 11 parts by weight, 12 parts by weight, 13 parts by weight, 14 parts by weight, 15 parts by weight, 16 parts by weight, 17 parts by weight, 18 parts by weight, 19 parts by weight, or 20 parts by weight or so, and the upper limit thereof may be 50 parts by weight, 48 parts by weight, 46 parts by weight, 44 parts by weight, 42 parts by weight, 40 parts by weight, 38 parts by weight, 36 parts by weight, 34 parts by weight, 32 parts by weight, 30 parts by weight, 28 parts by weight, 26 parts by weight, 24 parts by weight, 22 parts by weight, 20 parts by weight, 18 parts by weight, 16 parts by weight, 14 parts by weight, 12 parts by weight, or 10 parts by weight or so. The amount may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits.

Under such a ratio, the silicone compound appropriately interacts with the conductive polymer, so that a polymer layer with a desired shape can be effectively formed.

The polymer layer may also comprise ceramic particles in addition to the components. The surface of these ceramic particles has an affinity for ions, and accordingly, smoothly induces the movement of ions, so that the redox conversion can be effectively performed.

As the ceramic particles, known particles may be used without special limitation, and for example, metal oxide particles such as alumina, titania or silica may be applied.

When the ceramic particles are applied, the lower limit of the average particle diameter of the relevant particles may be, for example, 1 nm, 3 nm, 5 nm, 7 nm, 9 nm, 10 nm, 12 nm, 14 nm, 16 nm, 18 nm, 20 nm, 22 nm, 24 nm, 26 nm, 28 nm, or 30 nm or so, and the upper limit thereof may be 1,000 nm, 950 nm, 900 nm, 850 nm, 800 nm, 750 nm, 700 nm, 650 nm, 600 nm, 550 nm, 500 nm, 450 nm, 400 nm, 350 nm, 300 nm, 250 nm, 200 nm, 150 nm, 100 nm, 95 nm, 90 nm, 85 nm, 80

nm, 75 nm, 70 nm, 65 nm, 60 nm, 55 nm, 50 nm, 45 nm, 40 nm, 35 nm, or 30 nm or so. The average particle diameter may be within a range of less than or equal to, or less than any one of the above-described upper limits; or within a range of more than or equal to, or more than any one of the above-described lower limits; or within a range between less than or equal to, or less than any one of the above-described upper limits and more than or equal to, or more than any one of the above-described lower limits. The average particle diameter is a median particle diameter, also called a so-called D50 particle diameter.

If the ceramic particles have such an average particle diameter, their shape is not particularly limited, and the particles may have various shapes such as a spherical, rectangular, or plate shape, or other amorphous shapes.

When the ceramic particles are used, the lower limit of the amount of the ceramic particles in the polymer layer relative to 100 parts by weight of the conductive polymer may be 0.5 parts by weight, 1 part by weight, 2 parts by weight, 3 parts by weight, 4 parts by weight, 5 parts by weight, 6 parts by weight, 7 parts by weight, 8 parts by weight, 9 parts by weight, 10 parts by weight, 11 parts by weight, 12 parts by weight, 13 parts by weight, 14 parts by weight, 15 parts by weight, 16 parts by weight, 17 parts by weight, 18 parts by weight, 19 parts by weight, or 20 parts by weight or so, and the upper limit thereof may be 50 parts by weight, 48 parts by weight, 46 parts by weight, 44 parts by weight, 42 parts by weight, 40 parts by weight, 38 parts by weight, 36 parts by weight, 34 parts by weight, 32 parts by weight, 30 parts by weight, 28 parts by weight, 26 parts by weight, 24 parts by weight, 22 parts by weight, 20 parts by weight, 18 parts by weight, 16 parts by weight, 14 parts by weight, 12 parts by weight, or 10 parts by weight or so. The amount may be within a range of less than or equal to, or less than any one of the above-described upper limits; or within a range of more than or equal to, or more than any one of the above-described lower limits; or within a range between less than or equal to, or less than any one of the above-described upper limits and more than or equal to, or more than any one of the above-described lower limits.

The thickness of the polymer layer may be appropriately controlled depending on the objective. For example, the lower limit of the thickness may be 10 nm, 50 nm, 100 nm, 150 nm, 200 nm, 250 nm, 300 nm, 350 nm, 400 nm, 450 nm, or 500 nm or so, and the upper limit thereof may be 2 μm, 1.5 μm, 1 μm, 950 nm, 900 nm, 850 nm, 800 nm, 750 nm, 700 nm, 650 nm, 600 nm, 550 nm, 500 nm, 450 nm, 400 nm, 350 nm, or 300 nm or so. The thickness may be within a range of less than or equal to, or less than any one of the above-described upper limits; or within a range of more than or equal to, or more than any one of the above-described lower limits; or within a range between less than or equal to, or less than any one of the above-described upper limits and more than or equal to, or more than any one of the above-described lower limits.

The thickness of the polymer layer can be measured in the manner described in "3. Thickness measurement" of Example sections in this specification.

The polymer layer can exhibit appropriate surface characteristics by exhibiting the characteristics as described above, and accordingly, excellent adhesive force between the respective layers in the electrode or current collector can be secured.

For example, the surface energy of the polymer layer in the current collector may be controlled within a predetermined range. For example, the lower limit of the surface energy may be 25 mN/m, 30 mN/m, 35 mN/m, 40 mN/m, or 45 mN/m or so, and the upper limit thereof may be 100 mN/m, 95 mN/m, 90 mN/m, 85 mN/m, 80 mN/m, 75 mN/m, 70 mN/m, 65 mN/m, 60 mN/m, 55 mN/m, 50 mN/m, 45 mN/m, 40 mN/m, or 35 mN/m or so. The surface energy may be within a range of less than or equal to, or less than any one of the above-described upper limits; or within a range of more than or equal to, or more than any one of the above-described lower limits; or within a range between less than or equal to, or less than any one of the above-described upper limits and more than or equal to, or more than any one of the above-described lower limits.

The present specification also discloses a method for manufacturing the current collector or electrode.

The manufacturing method of the current collector may comprise a step of forming the polymer layer on the current collector body, and the manufacturing method of the electrode may comprise a step of forming the active material layer on the polymer layer.

The method of forming the polymer layer on the current collector body is not particularly limited. For example, the polymer layer may be formed by a method of diluting the above-described conductive polymer and other additives, if necessary, in an appropriate solvent to prepare a coating liquid, coating the liquid on the current collector body, and then drying it.

In another example, the polymer layer may also be formed by directly polymerizing the monomers forming the conductive polymer on the current collector body.

The method for preparing a coating composition for forming the polymer layer, and the coating method thereof, and the like are not particularly limited, and a method in a known coating method may be applied. In addition, the method of polymerizing the conductive polymer is not particularly limited, and a known method may be applied. For example, as a method for preparing polythiophene, typically, a method using an oxidation polymerization reaction or a method using a radical reaction is known, and such a method may also be applied to the process of forming the conductive polymer in the present application.

A polymer layer may be formed on a current collector body using the prepared coating composition. This process may typically comprise a step of coating the coating composition on a current collector body and a step of heat-treating the

coated coating composition. In this process, the characteristics of the polymer layer may also be controlled by the conditions of the heat treatment.

For example, the temperature T of the heat treatment and/or the time H of the heat treatment may be controlled.

For example, the lower limit of the temperature T may be 50°C, 55°C, 60°C, 65°C, 70°C, 75°C, 80°C, 85°C, 90°C, 95°C, 100°C, 105°C, 110°C, 115°C, 120°C, 125°C, 130°C, 135°C, or 140°C or so, and the upper limit thereof may be 300°C, 295°C, 290°C, 285°C, 280°C, 275°C, 270°C, 265°C, 260°C, 255°C, 250°C, 245°C, 240°C, 235°C, 230°C, 225°C, 220°C, 215°C, 210°C, 205°C, 200°C, 195°C, 190°C, 185°C, 180°C, 175°C, 170°C, 165°C, 160°C, 155°C, 150°C, 145°C, 140°C, 135°C, 130°C, 125°C, 120°C, 115°C, 110°C, 105°C, 100°C, 95°C, or 90°C or so. The temperature may be within a range of less than or equal to, or less than any one of the above-described upper limits; or within a range of more than or equal to, or more than any one of the above-described lower limits; or within a range between less than or equal to, or less than any one of the above-described upper limits and more than or equal to, or more than any one of the above-described lower limits. Within this range, the alignment state of the hydrocarbon functional groups in the conductive polymer can be appropriately adjusted, and accordingly, it is possible to secure the desired properties.

To achieve the objective, the product (TXH) of the heat treatment temperature T and the time H may be adjusted. For example, the lower limit of the product (TXH) of the heat treatment temperature T and the time H may be 0.01°C·hour, 0.05°C·hour, 0.1°C·hour, 0.2°C·hour, 0.3°C·hour, 0.5°C·hour, 1°C·hour, 5°C·hour, 10°C·hour, 15°C·hour, 20°C·hour, 25°C·hour, 30°C·hour, 35°C·hour, 40°C·hour, 45°C·hour, 50°C·hour, 75°C·hour, 100°C·hour, 110°C·hour, 120°C·hour, or 130°C·hour or so, and the upper limit thereof may also be 100000°C·hour, 95000°C·hour, 90000°C·hour, 85000°C·hour, 80000°C·hour, 75000°C·hour, 70000°C·hour, 65000°C·hour, 60000°C·hour, 55000°C·hour, 50000°C·hour, 45000°C·hour, 40000°C·hour, 35000°C·hour, 30000°C·hour, 25000°C·hour, 20000°C·hour, 15000°C·hour, 10000°C·hour, 9500°C·hour, 9000°C·hour, 8500°C·hour, 8000°C·hour, 7500°C·hour, 7000°C·hour, 6500°C·hour, 6000°C·hour, 5500°C·hour, 5000°C·hour, 4500°C·hour, 4000°C·hour, 3500°C·hour, 3000°C·hour, 2500°C·hour, 2000°C·hour, 1500°C·hour, 1400°C·hour, 1300°C·hour, 1200°C·hour, 1100°C·hour, 1000°C·hour, 900°C·hour, 800°C·hour, 700°C·hour, 600°C·hour, 500°C·hour, 400°C·hour, 300°C·hour, 200°C·hour, 100°C·hour, 90°C·hour, 80°C·hour, 70°C·hour, 60°C·hour, 50°C·hour, 45°C·hour, 40°C·hour, 35°C·hour, 30°C·hour, 25°C·hour, 20°C·hour,15°C·hour, 10°C·hour, 5°C·hour, 4°C·hour, 3°C·hour, 2°C·hour, 1°C·hour, or 0.5°C·hour or so. The product (TXH) may be within a range of less than or equal to, or less than any one of the above-described upper limits; or within a range of more than or equal to, or more than any one of the above-described lower limits; or within a range between less than or equal to, or less than any one of the above-described upper limits and more than or equal to, or more than any one of the above-described lower limits. Within this range, the alignment state of the hydrocarbon functional groups in the conductive polymer can be appropriately adjusted, and accordingly, it is possible to secure the desired properties.

To more effectively secure the desired properties, the heat treatment may be performed in two steps.

For example, the heat treatment may comprise a step of primarily heat-treating the coating composition at a first temperature T1 for a first time H1 and a step of secondarily heat-treating the coating composition at a second temperature T2 for a second time H2, wherein the temperatures T1 and T2 are different from each other, and/or the times H1 and H2 are different from each other.

For example, the lower limit of the temperature T1 may be 50°C, 55°C, 60°C, 65°C, 70°C, 75°C, 80°C, 85°C, 90°C, 95°C, 100°C, 105°C, 110°C, 115°C, 120°C, 125°C, 130°C, 135°C, or 140°C or so, and the upper limit thereof may be 300°C, 295°C, 290°C, 285°C, 280°C, 275°C, 270°C, 265°C, 260°C, 255°C, 250°C, 245°C, 240°C, 235°C, 230°C, 225°C, 220°C, 215°C, 210°C, 205°C, 200°C, 195°C, 190°C, 185°C, 180°C, 175°C, 170°C, 165°C, 160°C, 155°C, 150°C, 145°C, or 140°C or so. The temperature may be within a range of less than or equal to, or less than any one of the above-described upper limits; or within a range of more than or equal to, or more than any one of the above-described lower limits; or within a range between less than or equal to, or less than any one of the above-described upper limits and more than or equal to, or more than any one of the above-described lower limits. Within this range, the alignment state of the hydrocarbon functional groups in the conductive polymer can be appropriately adjusted, and accordingly, it is possible to secure the desired properties.

For example, the lower limit of the product (T1XH1) of the temperature T1 and the time H1 of the primary heat treatment may be 0.01°C·hour, 0.05°C·hour, 0.1°C·hour, 0.2°C·hour, or 0.3°C·hour or so, and the upper limit thereof may also be 1000°C·hour, 900°C·hour, 800°C·hour, 700°C·hour, 600°C·hour, 500°C·hour, 400°C·hour, 300°C·hour, 200°C·hour, 100°C·hour, 90°C·hour, 80°C·hour, 70°C·hour, 60°C·hour, 50°C·hour, 45°C·hour, 40°C·hour, 35°C·hour, 30°C·hour, 25°C·hour, 20°C·hour,15°C·hour, 10°C·hour, 5°C·hour, 4°C·hour, 3°C·hour, 2°C·hour, 1°C·hour, or 0.5°C·hour or so. The product (T1XH1) may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits. Within this range, the alignment state of the hydrocarbon functional groups in the conductive polymer can be appropriately adjusted, and accordingly, it is possible to secure the desired properties.

For example, for example, the lower limit of the heat treatment temperature T2 of the secondary heat treatment

may be 50°C, 55°C, 60°C, 65°C, 70°C, 75°C, 80°C, 85°C, 90°C, 95°C, 100°C, 105°C, 110°C, 115°C, 120°C, 125°C, or 130°C or so, and the upper limit thereof may be 300°C, 295°C, 290°C, 285°C, 280°C, 275°C, 270°C, 265°C, 260°C, 255°C, 250°C, 245°C, 240°C, 235°C, 230°C, 225°C, 220°C, 215°C, 210°C, 205°C, 200°C, 195°C, 190°C, 185°C, 180°C, 175°C, 170°C, 165°C, 160°C, 155°C, 150°C, 145°C, 140°C, 135°C, or 130°C or so. The temperature may be within a range of less than or equal to, or less than any one of the above-described upper limits; or within a range of more than or equal to, or more than any one of the above-described lower limits; or within a range between less than or equal to, or less than any one of the above-described upper limits and more than or equal to, or more than any one of the above-described lower limits. Within this range, the alignment state of the hydrocarbon functional groups in the conductive polymer can be appropriately adjusted, and accordingly, it is possible to secure the desired properties.

The product (T2XH2) of the secondary heat treatment temperature T2 and the time H2 may be adjusted. For example, the lower limit of the product (T2XH2) of the heat treatment temperature T and the time H may be 10°C·hour, 15°C·hour, 20°C·hour, 25°C·hour, 30°C·hour, 35°C·hour, 40°C·hour, 45°C·hour, 50°C·hour, 75°C·hour, 100°C·hour, 110°C·hour, 120°C·hour, or 130°C·hour or so, and the upper limit thereof may also be 1000°C·hour, 900°C·hour, 800°C·hour, 700°C·hour, 600°C·hour, 500°C·hour, 400°C·hour, 300°C·hour, 200°C·hour, 180°C·hour, 160°C·hour, 150°C·hour, 145°C·hour, 140°C·hour, 135°C·hour, or 130°C·hour or so. The product (T2XH2) may be within a range of less than or equal to, or less than any one of the above-described upper limits; or within a range of more than or equal to, or more than any one of the above-described lower limits; or within a range between less than or equal to, or less than any one of the above-described upper limits and more than or equal to, or more than any one of the above-described lower limits. Within this range, the alignment state of the hydrocarbon functional groups in the conductive polymer can be appropriately adjusted, and accordingly, it is possible to secure the desired properties.

In the above case, the lower limit of the ratio T1/T2 of the temperature T1 of the primary heat treatment and the temperature T2 of the secondary heat treatment may be 0.1, 0.3, 0.5, 0.7, 0.9, 0.95, 1, 1.01, 1.02, 1.03, 1.04, 1.05, 1.06, or 1.07 or so, and the upper limit thereof may be 10, 9, 8, 7, 6, 5, 4, 3, 2, 1.9, 1.8, 1.7, 1.6, 1.5, 1.4, 1.3, 1.2, or 1.1 or so. The ratio T1/T2 may be within a range of less than or equal to, or less than any one of the above-described upper limits; or within a range of more than or equal to, or more than any one of the above-described lower limits; or within a range between less than or equal to, or less than any one of the above-described upper limits and more than or equal to, or more than any one of the above-described lower limits. Within this range, the alignment state of the hydrocarbon functional groups in the conductive polymer can be appropriately adjusted, and accordingly, it is possible to secure the desired properties.

In the above case, the lower limit of the ratio H2/H1 of the time H1 of the primary heat treatment and the time H2 of the secondary heat treatment may be 0.5, 1, 3, 5, 7, 9, 10, 11, 12, 13, 14, 14.5, or 15 or so, and the upper limit thereof may be 100, 95, 90, 85, 80, 75, 70, 65, 60, 55, 50, 45, 40, 35, 30, 25, 20, 19, 18, 17, 16, 15.5, or 15 or so. The ratio H2/H1 may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits. Within this range, the alignment state of the hydrocarbon functional groups in the conductive polymer can be appropriately adjusted, and accordingly, it is possible to secure the desired characteristics.

In the above manufacturing process, a post-process such as an appropriate drying process may also be additionally performed following the coating and/or polymerization process.

In the above manufacturing process, a post-process such as an appropriate drying process may also be additionally performed following the coating and/or polymerization process.

Also, the method for forming the active material layer on the polymer layer is not particularly limited. Typically, the active material layer is formed by coating a slurry containing the electrode active material, a binder, and a conductive material on a current collector (on a polymer layer), followed by drying, and then rolling, and this known method can be equally applied to the present application.

In the process as above, the surface characteristics of the polymer layer are controlled, whereby it is possible to secure excellent adhesive force.

For example, the lower limit of the adhesive force of the active material layer to the polymer layer or the current collector body in the electrode may be 40 gf/20mm, 50 gf/20mm, 60 gf/20mm, 70 gf/20mm, 80 gf/20mm, 90 gf/20mm, 100 gf/20mm, 110 gf/20mm, 120 gf/20mm, 130 gf/20mm, or 140 gf/20mm or so, and the upper limit thereof may be 500 gf/20mm, 450 gf/20mm, 400 gf/20mm, 350 gf/20mm, 300 gf/20mm, 250 gf/20mm, 200 gf/20mm, 150 gf/20mm, 140 gf/20mm, 130 gf/20mm, 120 gf/20mm, 110 gf/20mm, 100 gf/20mm, 90 gf/20mm, 80 gf/20mm, or 70 gf/20mm or so. The surface energy may be within a range of less than or equal to, or less than any one of the above-described upper limits; or within a range of more than or equal to, or more than any one of the above-described lower limits; or within a range between less than or equal to, or less than any one of the above-described upper limits and more than or equal to, or more than any one of the above-described lower limits.

Here, the adhesive force of the active material layer to the polymer layer or current collector body means an adhesive force that a phenomenon in which all or a part of the active material layer is peeled off from the polymer layer, a phenomenon in which and all or a part of the polymer layer is peeled off from the current collector body, and other interface

destruction phenomena, and the like do not cause.

The present specification also relates to an electrode assembly, or an electrochemical element comprising the electrode, for example, a secondary battery.

The electrochemical element may comprise the electrode as the positive electrode and/or the negative electrode. If the electrode is used as the positive electrode and/or the negative electrode, other configurations or manufacturing methods of the electrochemical element are not particularly limited, and known methods can be applied.

**Advantageous Effects**

The present specification discloses a current collector. The current collector can exhibit excellent electrical properties, including low resistance, in a normal state and can ensure stability through an increase in resistance, and the like, in an abnormal state. The present specification also discloses a use of the current collector.

**Description of Drawings**

Figure 1 is an exemplary cross-sectional diagram of an electrode disclosed in the present specification.

Figure 2 is an NMR analysis result for a monomer of Preparation Example 1.

**Mode for Invention**

Hereinafter, current collectors and the like disclosed in the present specification are specifically described through examples and comparative examples, but the scope of the current collectors and the like is not limited by the following examples.

**1. NMR analysis method**

$^1$H-NMR analyses were performed at room temperature using an NMR spectrometer including a Bruker UltraShield spectrometer (300 MHz) with a 5 mm triple resonance probe. A sample was diluted in a solvent ($CDCl_3$) for NMR measurement to a concentration of about 10 mg/ml or so and used, and the chemical shift was expressed in ppm.

**2. GPC (Gel Permeation Chromatograph)**

Molecular weight characteristics were measured using GPC (Gel permeation chromatography). A sample is placed in a 5 mL vial and diluted with chloroform to a concentration of about 1 mg/mL or so. Thereafter, the standard sample for calibration and the sample to be analyzed were filtered through a syringe filter (pore size: 0.45 μm), and then measured. As the analysis program, Waters' Empower 3 was used, and a weight average molecular weight (Mw) and a number average molecular weight (Mn) were each obtained by comparing the elution time of the sample with the calibration curve, and the molecular weight distribution (PDI) was calculated by the ratio (Mw/Mn). The measurement conditions of GPC are as follows.

<GPC measurement conditions>

Device: Waters' 2414

Column: using 3 Styragels from Waters

Solvent: THF (tetrahydrofuran)

Column temperature: 35°C

Sample concentration: 1mg/mL, 1μL injection

Standard sample: polystyrene (Mp: 3900000, 723000, 316500, 52200, 31400, 7200, 3940, 485)

### 3. Thickness measurement

The thickness of the polymer layer, and the like was measured by cross-sectioning an electrode using an ion milling device (Hitachi, IM5000), and then photographing an image with a SEM (Scanning Electron Microscope) (JEOL, JSM-7200F). The conditions for forming the cross section by the ion milling were performed by setting the equipment in cross-section milling mode, the speed (reciprocation/min) of 3, the acceleration voltage of 6.0kV, the discharge voltage of 15 kV, the current of 150 μA, and the time of 4 hours.

### 4. EIS (Electrochemical Impedance Spectroscopy) conductivity (ohms) evaluation method

In a laminate in which a current collector body and a polymer layer on the current collector body are formed, an EIS conductivity was evaluated for the polymer layer. The EIS conductivity was measured in a state where the polymer layer was exposed without forming an active material layer on each polymer layer formed in examples and comparative examples. An electrochemical meter (potentiostat) (manufacturer: Princeton Applied Research, product name: PARASTAT-MC) was used as the EIS measuring device.

### 5. Measurement of maximum resistance change rate (EIS resistance)

To measure a PTC temperature and a maximum resistance value for confirming a PTC (positive thermal coefficient) effect, the following two types of coin cells were manufactured.

Coin cell 1: A polymer layer was formed to a thickness of about 10 μm or so on an aluminum foil (Al foil) (current collector body) having a thickness of about 15 μm using a conductive polymer. The polymer layer was formed in the manner described in each corresponding example and comparative example, but was formed to have the thickness at the above level. Then, a separator and a lithium film were laminated on the polymer layer to manufacture a laminate in which the aluminum foil/polymer layer/separator/lithium film were laminated, which was punched into a circle with a diameter of about 1.4 cm. A coin cell was manufactured using the circularly punched laminate and an electrolyte (using the Welcos CR2032 coin cell kit). Here, as the separator, the WL20C model from W Scope Korea was used; as the lithium film, a film with a thickness of about 100 μm or so was used; and as the electrolyte, 1M $LiPF_6$ solution (solvent: EC/DMC/EMC =3/4/3 (mass ratio), EC: Ethylene Carbonate, DMC: dimethyl carbonate, EMC: ethylmethyl carbonate)), which was Enchem's product, was used.

Coin cell 2: The coin cell was manufactured using a CR2032 standard coin cell kit (Welkos CR2032 coin cell kit). The electrode prepared in each of Examples or Comparative Examples was used as a positive electrode, and a lithium film (thickness: 100 μm) was used as a negative electrode. As the electrolyte of a carbonate-based electrolyte, a 1M $LiPF_6$ solution (solvent: EC/DMC/EMC=3/4/3 (mass ratio), EC: ethylene carbonate, DMC: dimethyl carbonate, EMC: ethylmethyl carbonate) was used, and a PE (poly(ethylene)) separator (WL20C model from W Scope Korea) was used as the separator.

The coin cell 1 or 2 is placed in the center of a convection oven (manufacturer: JEIO TECH, product name: OF3-05W). The temperature of the oven is set to an initial temperature of 25°C, a final temperature of 135°C, and a temperature increase of 5°C per minute. The coin cell is connected to an electrochemical meter (potentiostat) (Princeton Applied Research, PARASTAT-MC) outside the oven to enable EIS resistance measurement. Subsequently, in a state where the temperature increases as set, the EIS resistance is measured at each temperature (measured up to 135°C while increasing the measurement temperature by 5°C in the order of 25°C, 30°C, 35°C, and 40°C), and the maximum resistance value confirmed during the above process and the temperature (PTC temperature) at which the maximum resistance value is confirmed are measured, and the minimum resistance value and the temperature at which the minimum resistance value is confirmed are also measured.

### 6. 2C capacity and efficiency measurement

A coin cell was manufactured using a CR2032 standard coin cell kit (Welkos CR2032 coin cell kit). The electrode prepared in each of Examples or Comparative Examples was used as a positive electrode, and a lithium film (thickness: 100 μm) was used as a negative electrode. As the electrolyte of a carbonate-based electrolyte, a 1M $LiPF_6$ solution (solvent: EC/DMC/EMC=3/4/3 (mass ratio), EC: ethylene carbonate, DMC: dimethyl carbonate, EMC: ethylmethyl carbonate) was used, and a PE (poly(ethylene)) separator (WL20C model from W Scope Korea) was used as the separator.

The coin cell was charged and discharged once at 25°C, and the capacity at 2C was obtained. The capacity was measured by charging it in a CC (constant current)/CV (constant voltage) method at a rate of 0.5C by setting a final charging voltage of 4.5V and a final charging current of 1mA, and discharging it in a CC (constant current) method at a rate of 2C by setting a final discharging voltage of 3.0V again.

By obtaining the capacity value (A) upon charging it at a rate of 0.5C in a CC (constant current)/CV (constant voltage) method under conditions of a final charging voltage of 4.5V and a final charging current of 1 mA, and discharging it at a rate of 0.1C in the CC (constant current) method with a final discharging voltage of 3.0V, and the capacity value (B) upon charging it at a rate of 0.5C in the CC (constant current)/CV (constant voltage) method under conditions of a final charging voltage of 4.5V and a final charging current of 1 mA, and discharging it at a rate of 2C in the CC (constant current) method with a final discharging voltage of 3.0V, the discharge efficiency was evaluated using Equation 100×B/A.

**Preparation Example 1. Synthesis of monomer (A)**

A monomer (monomer (A)) of Formula C below was synthesized in the following manner.

[Formula C]

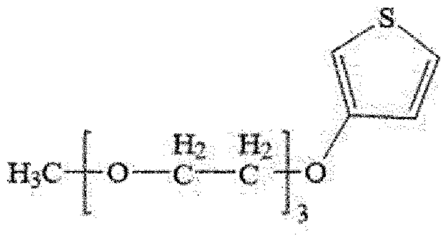

In 100 ml of toluene, 1.372 g (12.02 mmol, 1eq) of 3-methoxythiophene and 3 g (16.83 mmol, 1.4eq) of triethylene glycol monomethyl ether were dissolved together with 230 mg of p-toluenesulfonic acid (p-TsOH), and mixed. While the mixture was refluxed at 120°C to react, methanol generated by the reaction (transetherification) was removed by 4A type molecular sieves filled in an extractor (soxhlet extractor). The reactant was refluxed for 24 hours, and then quenched with water, and extracted with ethyl acetate, and then washed with brine, and dried over magnesium sulfate ($MgSO_4$). The solvent was removed using a rotary evaporator, and the residue was purified by column chromatography eluting with methylene chloride/hexane (2:1) to obtain the target compound (monomer (A)). The NMR analysis results for the target compound (monomer (A)) are as shown in Figure 2.

**Preparation Example 2. Synthesis of polythiophene (A)**

To a solution in which 3.20 g (19.71 mmol, 3eq) of iron (III) chloride was dissolved in 150ml of methylene chloride, 0.787 g (3.12 mmol, 0.475 eq) of 3-dodecylthiophene, 0.525 g (3.12 mmol, 0.475 eq) of 3-hexylthiophene, and 0.083 g (0.3285 mmol, 0.05 eq) of the monomer (A) of Preparation Example 1 were introduced, and polymerized at 25°C for 24 hours to prepare polythiophene (A). The polymerization solution was placed in an osmosis membrane with an MWCO (molecular weight of cut-off) of 5000, and then immersed in 200 ml of an acetonitrile solvent to remove unreacted iron chloride ($(^2$, monomers and low molecular weight oligomers. The residue precipitated inside the osmosis membrane was washed with methanol, and dried at 60°C for 12 hours to produce polythiophene (A). The polythiophene (A) had a weight average molecular weight (Mw) and a number average molecular weight (Mn) of 150,000 g/mol and 50,500 g/mol, respectively.

**Preparation Example 3. Carbon fiber coated with polydopamine**

As carbon fiber, VGCF (Vapor Grown Carbon Fiber) (Showa Denko, VGCF™ product) was used. The VGCF had a cross-sectional diameter of about 150 nm and a length of about 10 μm or so. Polydopamine coating was performed on the carbon fiber in the following manner. Dopamine hydrochloride (CAS No. 62-31-7) was added to a buffer solution and stirred at room temperature (about 25°C). Here, as the buffer solution, a 0.1M pH 8.5 Tris-buffer product from BIOSESANG was used. The molar concentration of dopamine hydrochloride in the final solution was about 2 mg/mL or so. The VGCF was dispersed in a mixture of the buffer solution and dopamine hydrochloride at a concentration of about 4 mg/mL, and stirred for about 18 hours (sonication for 1 hour) to form a polydopamine coating layer on the VGCF, and vacuum-dried after filtering under reduced pressure using a paper filter to obtain the VGCF coated with polydopamine.

**Example 1.**

A coating liquid was prepared by dispersing the polythiophene (A) of Preparation Example 2 and the polydopamine-coated VGCF of Preparation Example 3 in a solvent (chloroform) in a weight ratio (A: VGCF) of 10:1. The

coating liquid was coated on a current collector body using a bar coating method (#8 Meyer bar), maintained at 140°C for 4 minutes or so, and maintained at 130°C or so for 1 hour or so to form a layer (polymer layer) having a thickness of about 400 nm. As the current collector body, an Al foil having a thickness of about 15 μm or so was used. Subsequently, an active material layer was formed on the polymer layer. A slurry containing lithium cobalt oxide ($LiCoO_2$), a carbon-based conductive material (ECP (Ketjen Black) 0.5%, SFG (Trimrex graphite) 0.4%, DB (Denka Black) 0.4%), PVDF (polyvinylidene fluoride), and NMP (N-methyl-2-pyrrolidone) in a weight ratio of 75:1:1:23 ($LiCoO_2$: conductive material: PVDF: NMP) was applied to a thickness of about 90 μm or so on the polymer layer using a doctor blade, dried at room temperature, and then further dried under vacuum conditions at 120°C to form the active material layer. Subsequently, an electrode was manufactured by rolling it to have a void ratio of about 25% or so.

**Example 2.**

An electrode was manufactured in the same manner as in Example 1, except that the polymer layer had a thickness of about 700 nm or so by performing the coating twice.

**Example 3.**

A coating liquid was prepared by dispersing the polythiophene (A) of Preparation Example 2 and the polydopamine-coated VGCF of Preparation Example 3 in a solvent (chloroform) in a weight ratio (A: VGCF) of 10:1. The coating liquid was coated on a current collector body using a bar coating method (#8 Meyer bar), and maintained at 80°C for 10 minutes or so to form a layer (polymer layer) having a thickness of about 400 nm. As the current collector body, an Al foil having a thickness of about 15 μm or so was used. Subsequently, an active material layer was formed on the polymer layer. A slurry containing lithium cobalt oxide ($LiCoO_2$), a carbon-based conductive material (ECP (Ketjen Black) 0.5%, SFG (Trimrex graphite) 0.4%, DB (Denka Black) 0.4%), PVDF (polyvinylidene fluoride), and NMP (N-methyl-2-pyrrolidone) in a weight ratio of 75:1:1:23 ($LiCoO_2$: conductive material: PVDF: NMP) was applied to a thickness of about 90 μm or so on the polymer layer using a doctor blade, dried at room temperature, and then further dried under vacuum conditions at 120°C to form the active material layer. Subsequently, an electrode was manufactured by rolling it to have a void ratio of about 25% or so.

**Comparative Example 1.**

A coating liquid was prepared by dispersing the polythiophene (A) of Preparation Example 2 in a solvent (chloroform). The coating liquid was coated on a current collector body using a bar coating method (#8 Meyer bar), maintained at 140°C for 4 minutes or so, and maintained at 130°C or so for 1 hour or so to form a layer (polymer layer) having a thickness of about 400 nm. As the current collector body, an Al foil having a thickness of about 15 μm or so was used. Subsequently, an active material layer was formed on the polymer layer. A slurry containing lithium cobalt oxide ($LiCoO_2$), a carbon-based conductive material (ECP (Ketjen Black) 0.5%, SFG (Trimrex graphite) 0.4%, DB (Denka Black) 0.4%), PVDF (polyvinylidene fluoride), and NMP (N-methyl-2-pyrrolidone) in a weight ratio of 75:1:1:23 ($LiCoO_2$: conductive material: PVDF: NMP) was applied to a thickness of about 90 μm or so on the polymer layer using a doctor blade, dried at room temperature, and then further dried under vacuum conditions at 120°C to form the active material layer. Subsequently, an electrode was manufactured by rolling it to have a void ratio of about 25% or so.

**Comparative Example 2.**

An electrode was manufactured in the same manner as in Comparative Example 1, except that the polymer layer had a thickness of about 700 nm or so by performing the coating twice.

The measurement results for the above- manufactured electrodes are summarized in Table 1 below.

[Table 1]

| | Example | | | Comparative Example | |
|---|---|---|---|---|---|
| | 1 | 2 | 3 | 1 | 2 |
| EIS conductivity (ohms) | 50 | 50 | 100 | 1000 | 800 |
| 2C capacity (mAh/g) | 150 | 145 | 110 | 110 | 100 |
| Efficiency (%) | 85 | 80 | 70 | 70 | 60 |

(continued)

| | | Example | | | Comparative Example | |
|---|---|---|---|---|---|---|
| | | 1 | 2 | 3 | 1 | 2 |
| Coin cell 1 | PTC temperature (°C) | 90 | 90 | 85 | 90 | 90 |
| | Maximum resistance (ohms) | 15000 | 18000 | 15000 | 15000 | 18000 |
| | Minimum resistance temperature (°C) | 60 | 60 | 60 | 60 | 60 |
| | Minimum resistance (ohms) | 30 | 40 | 150 | 600 | 500 |
| Coin cell 2 | PTC temperature (°C) | 90 | 90 | 90 | 90 | 90 |
| | Maximum resistance (ohms) | 100 | 200 | 100 | 100 | 200 |
| | Minimum resistance temperature (°C) | 60 | 60 | 60 | 60 | 60 |
| | Minimum resistance (ohms) | 8 | 5 | 15 | 15 | 15 |

## Claims

**1.** A current collector comprising:

a current collector body; and
a polymer layer formed on the current collector body,
wherein the polymer layer comprises a conductive polymer and a conductive material.

**2.** The current collector according to claim 1, wherein the electrode active material in the polymer layer has a content of 10 wt% or less.

**3.** The current collector according to claim 1, wherein the conductive polymer comprises a first thiophene unit having a hydrocarbon functional group with 10 or more carbon atoms and a second thiophene unit having a hydrocarbon functional group with 9 or less carbon atoms.

**4.** The current collector according to claim 3, wherein the hydrocarbon functional group is a linear or branched alkyl group, alkenyl group, or alkynyl group.

**5.** The current collector according to claim 3, wherein the hydrocarbon functional group of the first thiophene unit has the number of carbon atoms in a range of 10 to 20, and the hydrocarbon functional group of the second thiophene unit has the number of carbon atoms in a range of 3 to 9.

**6.** The current collector according to claim 3, wherein the conductive polymer comprises the thiophene unit having a hydrocarbon functional group with 10 or more carbon atoms and the thiophene unit having a hydrocarbon functional group with 9 or less carbon atoms in an amount of 80 mol% or more.

**7.** The current collector according to claim 3, wherein a ratio M2/M1 of the mole number M2 of the second thiophene unit to the mole number M1 of the first thiophene unit is within a range of 0.01 to 100.

**8.** The current collector according to claim 3, the first thiophene unit is represented by Formula 1 below, and the second thiophene unit is represented by Formula 3 below:

[Formula 1]

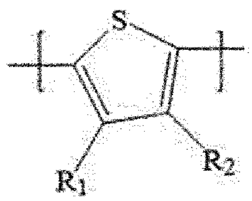

wherein $R_1$ and $R_2$ are each independently hydrogen or a hydrocarbon functional group with 10 or more carbon atoms, and wherein at least one of $R_1$ and $R_2$ is the hydrocarbon functional group with 10 or more carbon atoms, or $R_1$ and $R_2$ are linked to each other to form a divalent functional group of Formula 2 below:

[Formula 2]

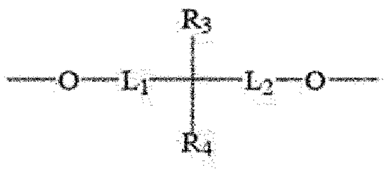

wherein $L_1$ and $L_2$ are each independently a single bond, an alkylene group, or an alkylidene group, and wherein $R_3$ and $R_4$ are each independently hydrogen or the hydrocarbon functional group with 10 or more carbon atoms, and wherein at least one of $R_3$ and $R_4$ is the hydrocarbon functional group with 10 or more carbon atoms:

[Formula 3]

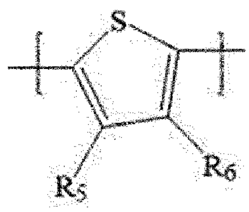

wherein $R_5$ and $R_6$ are each independently hydrogen or a hydrocarbon functional group with 9 or less carbon atoms, and wherein at least one of $R_5$ and $R_6$ is the hydrocarbon functional group with 9 or less carbon atoms, or $R_5$ and $R_6$ are linked to each other to form a divalent functional group of Formula 4 below:

[Formula 4]

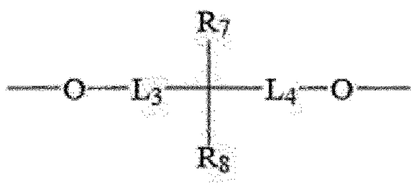

wherein $L_3$ and $L_4$ are each independently a single bond, an alkylene group, or an alkylidene group, wherein $R_7$ and $R_8$ are each independently hydrogen or the hydrocarbon functional group with 9 or less carbon atoms, and wherein at least one of $R_7$ and $R_8$ is the hydrocarbon functional group with 9 or less carbon atoms.

**9.** The current collector according to claim 3, wherein the conductive polymer further comprises a third thiophene unit having a polar functional group.

**10.** The current collector according to claim 9, wherein the polar functional group is a carboxyl group, a hydroxy group, an amino group, a cyano group, a nitro group, an ether group, or a functional group of Formula 5 below:

[Formula 5]

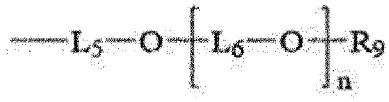

wherein $L_5$ is a single bond, an alkylene group, or an alkylidene group, wherein $L_6$ is an alkylene group or an alkylidene group, wherein $R_9$ is hydrogen or an alkyl group, and wherein n is a number in a range of 1 to 10.

**11.** The current collector according to claim 9, wherein the third thiophene unit is represented by Formula 6 below:

[Formula 6]

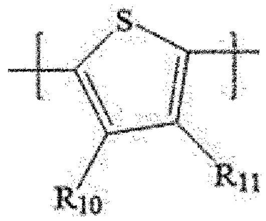

wherein $R_{10}$ and $R_{11}$ are each independently hydrogen or a polar functional group, and wherein at least one of $R_{10}$ and $R_{11}$ is the polar functional group, or $R_{10}$ and $R_{11}$ are linked to each other to form a divalent functional group of Formula 7 below:

[Formula 7]

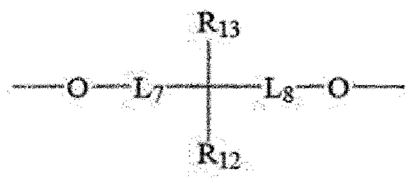

wherein $L_7$ and $L_8$ are each independently a single bond, an alkylene group, or an alkylidene group, wherein $R_{12}$ and $R_{13}$ are each independently hydrogen or the polar functional group, and wherein at least one of $R_{12}$ and $R_{13}$ is the polar functional group.

**12.** The current collector according to claim 9, wherein the third thiophene unit in the conductive polymer is included in an amount such that 1 mol to 500 mol of the first and second thiophene units exist per 1 mol of the third thiophene unit.

**13.** The current collector according to claim 1, wherein R of Equation A below is 100 or more:

[Equation A]

$$R = R_{MAX}/R_{MIN}$$

wherein $R_{MAX}$ is the maximum value of the EIS resistance of the polymer layer confirmed in a temperature range of 25°C to 135°C, and $R_{MIN}$ is the minimum value of the EIS resistance of the polymer layer confirmed in a temperature range of 25°C to 135°C.

**14.** The current collector according to claim 13, wherein $R_{MAX}$ is 9,000 ohms or more.

**15.** The current collector according to claim 13, wherein the temperature at which $R_{MAX}$ is confirmed is within a range of 80°C to 135°C, and the temperature at which $R_{MIN}$ is confirmed is within a range of 25°C to 80°C.

**16.** The current collector according to claim 1, wherein the conductive material is carbon particles, carbon fibers, graphene, graphite, carbon black, or carbon nanotubes.

**17.** The current collector according to claim 1, wherein the conductive material is surface-treated with a polyphenol-based compound.

**18.** An electrode comprising:

the current collector according to any one of claims 1 to 17; and
an active material layer formed on the polymer layer of the current collector.

**19.** An electrode assembly comprising the electrode of claim 18.

**20.** A secondary battery comprising the electrode of claim 18.

[Figure 1]

| |
|---|
| 300 |
| 200 |
| 100 |

[Figure 2]

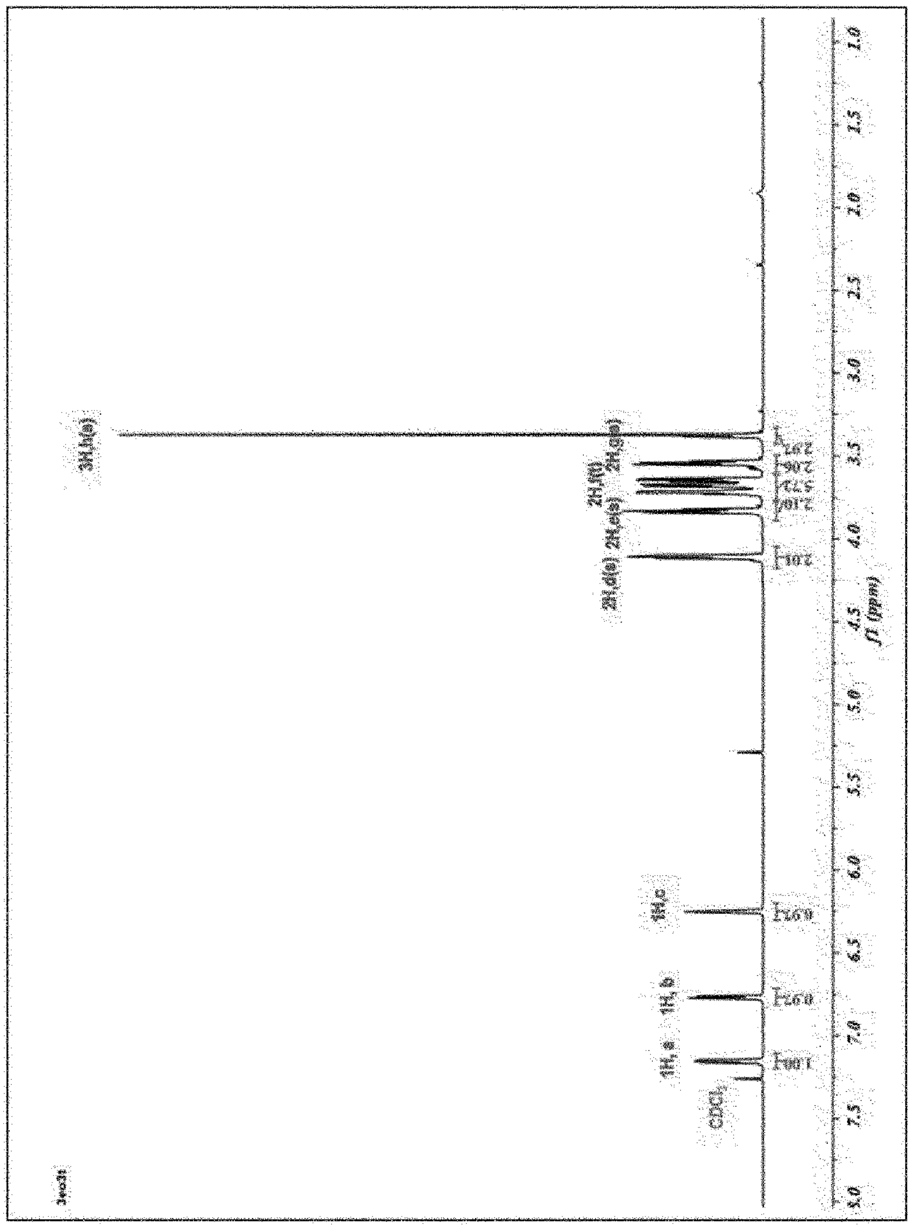

## INTERNATIONAL SEARCH REPORT

International application No.
**PCT/KR2023/016209**

**A. CLASSIFICATION OF SUBJECT MATTER**

**H01M 4/66**(2006.01)i; **H01M 4/62**(2006.01)i; **C08G 61/12**(2006.01)i; **C08G 65/326**(2006.01)i; **H01M 4/131**(2010.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/66(2006.01); H01M 10/052(2010.01); H01M 2/26(2006.01); H01M 4/13(2010.01); H01M 4/134(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 집전체(collector), 전도성 고분자(conductive polymer), 도전성 물질(conductive material), 티오펜(thiophene), 극성 관능기(polar functional group)

**C. DOCUMENTS CONSIDERED TO BE RELEVANT**

| Category* | Citation of document, with indication, where appropriate, of the relevant passages | Relevant to claim No. |
|---|---|---|
| X<br>Y | US 2021-0351413 A1 (GLOBAL GRAPHENE GROUP, INC.) 11 November 2021 (2021-11-11)<br>See paragraphs [0092] and [0093]; and claims 1-14. | 1,2,13-16,18-20<br>3-12,17 |
| X<br>Y | LI, H. et al. Building a thermal shutdown cathode for Li-Ion batteries using temperature-responsive poly(3-dodecylthiophene). Energy technology. 2020, vol. 8, thesis no.: 2000365, inner pp. 1-9.<br>See inner pages 1, 7 and 8; and figure 6. | 1,2,13-16,18-20<br>3-12,17 |
| Y | KR 10-2022-0043773 A (LG ENERGY SOLUTION, LTD.) 05 April 2022 (2022-04-05)<br>See claims 14-18; and paragraphs [0033]-[0037], [0126], [0127], [0135] and [0136]. | 9-12 |
| Y | KR 10-2015-0027115 A (TORAY INDUSTRIES, INC.) 11 March 2015 (2015-03-11)<br>See abstract; claims 1-3; and paragraphs [0012]-[0014]. | 17 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 February 2024** | **02 February 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

INTERNATIONAL SEARCH REPORT

International application No.
PCT/KR2023/016209

C. DOCUMENTS CONSIDERED TO BE RELEVANT

| Category* | Citation of document, with indication, where appropriate, of the relevant passages | Relevant to claim No. |
|---|---|---|
| X<br>Y | CN 110676463 A (NINGBO AMTEM NEW ENERGY TECHNOLOGY CO., LTD.) 10 January 2020 (2020-01-10)<br>See claims 1-10. | 1,2,13-16,18-20<br>17 |
| Y | DE 102015206146 A1 (ROBERT BOSCH GMBH) 13 October 2016 (2016-10-13)<br>See claims 1-15. | 3-12 |

Form PCT/ISA/210 (second sheet) (July 2022)

**INTERNATIONAL SEARCH REPORT**
**Information on patent family members**

International application No.
**PCT/KR2023/016209**

| Patent document cited in search report | Publication date (day/month/year) | Patent family member(s) | Publication date (day/month/year) |
|---|---|---|---|
| US 2021-0351413 A1 | 11 November 2021 | None | |
| KR 10-2022-0043773 A | 05 April 2022 | CN 116420247 A | 11 July 2023 |
| | | EP 4203094 A1 | 28 June 2023 |
| | | US 2023-0335709 A1 | 19 October 2023 |
| | | WO 2022-071704 A1 | 07 April 2022 |
| KR 10-2015-0027115 A | 11 March 2015 | CA 2872445 A1 | 12 December 2013 |
| | | CA 2872445 C | 07 April 2020 |
| | | CN 103466602 A | 25 December 2013 |
| | | CN 104271497 A | 07 January 2015 |
| | | CN 104271497 B | 14 September 2016 |
| | | EP 2858945 A1 | 15 April 2015 |
| | | EP 2858945 B1 | 20 September 2017 |
| | | ES 2642192 T3 | 15 November 2017 |
| | | JP 2015-520109 A | 16 July 2015 |
| | | JP 6098714 B2 | 22 March 2017 |
| | | KR 10-2000812 B1 | 16 July 2019 |
| | | TW 201400408 A | 01 January 2014 |
| | | TW I580637 B | 01 May 2017 |
| | | US 10347916 B2 | 09 July 2019 |
| | | US 2015-0140438 A1 | 21 May 2015 |
| | | WO 2013-181994 A1 | 12 December 2013 |
| CN 110676463 A | 10 January 2020 | CN 110676463 B | 17 August 2021 |
| DE 102015206146 A1 | 13 October 2016 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020220135139

### Non-patent literature cited in the description

- *CHEMICAL ABSTRACTS*, 62-31-7